# EUROPÄISCHE PATENTSCHRIFT

(11) **EP 2 698 200 B1**
(45) Veröffentlichungstag und Bekanntmachung des Hinweises auf die Patenterteilung: **14.10.2015**
(21) Anmeldenummer: 12180269.8
(22) Anmeldetag: 13.08.2012
(51) Int. Cl.: B01J 31/02, C08G 18/24

(54) **Thermolatente Katalysatoren, deren Herstellung und Verwendung**
Thermo-latent catalysts, production and use of same
Catalyseurs thermolatents, leur fabrication et leur utilisation

(43) Veröffentlichungstag der Anmeldung: 19.02.2014
(73) Patentinhaber: TIB Chemicals AG, 68219 Mannheim (DE)
(72) Erfinder: Dr. Frank Lehmann, 67373 Dudenhofen (DE); Dr. Udo Kittelmann, 63322 Rödermark (DE)
(74) Vertreter: Rippel, Hans Christoph

(56) Entgegenhaltungen:
- WO-A2-2011/051465
- US-A- 5 820 925
- R.C. MEHROTRA ET AL: "Reactions of tin tetraacetate with sulphur ligands", INORGANICA CHIMICA ACTA, Bd. 47, 1. Januar 1981 (1981-01-01), Seiten 125-130, XP055048801, ISSN: 0020-1693, DOI: 10.1016/S0020-1693(00)89317-2
- JONES J ET AL: "The preparation of bis(isopropoxy)thiolato complexes of titanium(IV) and their Lewis base adducts", POLYHEDRON, PERGAMON PRESS, OXFORD, GB, Bd. 8, Nr. 24, 1. Januar 1989 (1989-01-01) , Seiten 2893-2895, XP002281271, ISSN: 0277-5387, DOI: 10.1016/S0277-5387(00)86286-5

## Beschreibung

Die Erfindung betrifft die Verwendung von Metallverbindungen als Katalysatoren zur Herstellung von Polymeren, insbesondere Polyurethanen.

Polyurethane sind seit langem bekannt und werden in vielfältigen Bereichen eingesetzt. Häufig muss bei der Herstellung der Polyurethane die eigentliche Polyurethanreaktion unter Verwendung von Katalysatoren durchgeführt werden, da sonst die Reaktion zu langsam abläuft und gegebenenfalls zu Polyurethanprodukten mit schlechten mechanischen Eigenschaften führt. In den meisten Fällen muss die Reaktion zwischen der Hydroxyl- und der Isocyanatkomponente katalysiert werden.

Bei den gebräuchlichen Katalysatoren handelt es sich im Allgemeinen um Basen oder Lewis-Säuren. Typische als Katalysatoren eingesetzte Basen sind zum Beispiel Aminverbindungen wie 1,8-Diazabicyclo[5.4.0]un-dec-7-en (DBU), 1,4-Diazabicyclo-[2.2.2]octan (DABCO), 2,2-Dimorpholinodiethylether (DMDEE) oder Triethanolamin. Beispiele für Lewis-Säure-Katalysatoren sind Metallsalze wie Zinn-, Blei-, Bismut- oder Zinkcarboxylate, Organozinnverbindungen wie Dibutylzinn- oder Dioctylzinnverbindungen, Eisenverbindungen wie Eisenacetylacetonat, Titan- oder Zirkoniumkomplexe.

Eine Anforderung an den Katalysator ist, dass dieser möglichst selektiv nur eine der vielfältigen Polyurethanreaktionen katalysiert, wie zum Beispiel ausschließlich die Reaktion zwischen OH- und NCO-Gruppen. Nebenreaktionen, wie beispielsweise Di- oder Trimerisierungen des Isocyanats, Allophanatisierungen, Biuretisierungen, Wasserreaktionen oder Hamstoffbildungen sollen dabei nicht katalysiert werden. Derzeit gibt es jedoch kaum Katalysatoren, die selektiv nur eine definierte Reaktion katalysieren.

Von besonderem Interesse sind Katalysatoren, die eine gewisse Latenz zeigen. Hierbei handelt es sich um Katalysatoren, die zunächst inaktiv sind und erst unter bestimmten Bedingungen aktiv werden. Erfolgt die Aktvierung durch Temperaturerhöhung, spricht man von thermo latenten Katalysatoren. Die Verwendung latenter Katalysatoren ermöglicht lange Topfzeiten und schnelle Entformungszeiten.

Noch im Einsatz ist mit Phenylquecksilberneodecanoat (Thorcat 535, Cucore 44) ein Vertreter, der bis heute bekanntesten Klasse von latenten Katalysatoren. Phenylquecksilbernedecanoat ist zunächst nahezu inaktiv und wird erst nach langsamer Erwärmung der Mischung, meist aufgrund der Exothermie der unkatalysierten Umsetzung von OH- mit NCO-Gruppen, bei einer bestimmten Temperatur (meist bei ca. 70 °C) schlagartig aktiv. Bei Verwendung dieses Katalysators können sehr lange Topfzeiten in Kombination mit sehr kurzen Aushärtezeiten erreicht werden. Dies ist besonders dann von Vorteil, wenn sehr viel Material ausgetragen werden muss (zum Beispiel eine große Form gefüllt werden muss) und nach erfolgter Austragung die Reaktion schnell beendet werden soll.

Ein besonderer Vorteil latenter Katalysatoren besteht darin, dass sie im fertigen Polyurethanwerkstoff infolge ihrer mit sinkender Temperatur abnehmenden katalytischen Aktivität die Spaltung von Urethangruppen, zum Beispiel bei Raumtemperatur, im Vergleich zu konventionellen Katalysatoren nur in einem geringen Ausmaß katalysieren. Ihre Verwendung liefert somit einen Beitrag zu günstigen Dauergebrauchseigenschaften der Polyurethane.

Darüber hinaus ist beim Einsatz von Katalysatoren generell darauf zu achten, dass die physikalischen und mechanischen Eigenschaften der Produkte möglichst nicht negativ beeinflusst werden. Dies ist auch ein Grund dafür, dass die selektive Katalyse einer bestimmten Reaktion so wichtig ist. Gerade bei der Herstellung von Elastomeren, insbesondere Gießelastomeren ist die Verwendung von Quecksilberkatalysatoren sehr stark verbreitet, da diese nicht mit zusätzlichen Katalysatoren kombiniert werden müssen und selektiv die Reaktion zwischen OH- und NCO-Gruppen katalysieren. Ein gravierender Nachteil von Quecksilberverbindungen ist deren hohe Toxizität. Demgemäß werden große Anstrengungen unternommen, alternative Katalysatoren für die Herstellung von Polyurethanen zu entwickeln. Einen Überblick über den Stand der Technik vermitteln beispielsweise die WO 2005/058996, US 3714077, US 4584362, US 5011902, US 5902835 sowie die US 6590057.

Systeme, die zumindest weniger toxisch als Quecksilberverbindungen sind, zum Beispiel solche auf Basis von Zinn, Bismuth, Zink, Titan oder Zirkonium, aber auch Amin- oder Amidinkatalysatoren, sind auf dem Markt bekannt. Diese sind jedoch nicht so robust und einfach zu handhaben wie die Quecksilberverbindungen.

Bestimmte Kombinationen von Katalysatoren bewirken, dass die Gelreaktion weitgehend von der Aushärtungsreaktion getrennt erfolgt, da viele dieser Katalysatoren nur selektiv wirken. Beispielsweise wird Bismuth(III)-neodecanoat mit Zinkneodecanoat und Neodecansäure kombiniert. Oft wird noch zusätzlich 1,8-Diazabicyclo[5.4.0]undec-7-en zugegeben. Obwohl diese Kombination zu den bekanntesten gehört, ist sie leider nicht so breit und universell einsetzbar, wie zum Beispiel Thorcat 535 (Firma Thor Especialidades S.A.) und ist darüber hinaus anfällig bei Rezepturschwankungen. Die Verwendung dieser Katalysatoren ist beispielsweise in der DE 10 2004 011 3481 A1 beschrieben.

Bei dem am Markt erhältlichen Produkt DABCO DC-2 der Firma Air Products Chemicals Europe B.V. handelt es sich um eine Katalysatormischung aus 1,4-Diazabicyclo-[2.2.2]octan (DABCO) und Dibutylzinndiacetat. Der Nachteil dieser Mischung ist, dass das Amin unmittelbar aktivierend wirkt. Alternative Systeme sind beispielsweise Polycat SA-1/10 (Firma Air Products Chemicals Europe B.V.). Hierbei handelt es sich um mit Säure blockiertes DABCO. Obwohl dieses System thermolatent ist, werden derartige Systeme wegen ihrer schlechten katalytischen Wirkung bei der Aushärtung nicht verwendet. Die in Gegenwart dieser Systeme hergestellten Elastomere bleiben am Ende der Reaktion klebrig; man spricht auch vom "Verhungern" der Reaktion.

Gemäß US 5478790 werden gängige Organozinnverbindungen, gängige anorganische Zinnverbindungen sowie die Verbindung Dibutylzinnbis(laurylmercaptid) als Katalysatoren verwendet.

US 4788083 beschreibt Zinnkomplexe, die zusammen mit einem Überschuss an einer Mercaptoverbindung als Katalysatoren eingesetzt werden.

Aufgabe der vorliegenden Erfindung ist es, Katalysatoren zur Verfügung zu stellen, die es ermöglichen, Polyisocyanat-Polyadditionsverbindungen, Polyester oder Polysiloxane mit guten mechanischen Eigenschaften herzustellen, wobei latente Eigenschaften zu einer günstigen Kombination von langer Verarbeitungszeit und schneller Härtung führen.

Gelöst wird die Aufgabe durch die Verwendung einer oder mehrerer Metallverbindungen der Formel (A), (B) oder (C),

XₐY₍ₘ₋ₐ₎L_{d}M^{A} (A)

(X_{b}Y_{(m-b-1)}LₑM^{B})₂O (B)

[M^{C}(X_{c}Y_{(m-c-2})L_{f})O]ₙ (C)

als Katalysator zur Herstellung von Polymeren,
dadurch gekennzeichnet, dass die Symbole M^{A}, M^{B}, M^{C}, X, Y, L sowie die Indizes m, a, b, c, d, e, f, n folgende Bedeutung haben:
- M^{A}: ist Sn, Ti, Zr, Hf, Fe oder Zn;
- M^{B}: ist gleich oder verschieden Sn, Ti, Zr, Hf, Fe oder Zn;
- M^{C}: ist gleich oder verschieden Sn, Ti, Zr, Hf oder Fe;
- X: ist ∼SR¹;
- Y: ist gleich oder verschieden Halogen, OR², OC(O)R², OS(O)₂R², NR²R³, NR²C(O)R³, NR²S(O)₂R³, OP(O)(OR²)(OR³), OP(O)(OR²)R³ oder OP(O)R²R³;
- L: ist ein neutraler Ligand und gleich oder verschieden;
oder mindestens zwei Vertreter aus der Gruppe X und Y bilden gemeinsam zusammen mit dem M-Atom, an das sie gebunden sind, mindestens einen Ring;
- m: ist 2, wenn M Zn ist;
3, wenn M Fe ist; und
4, wenn M Sn, Ti, Zr, Hf ist;
- a: ist eine ganze Zahl von 1 bis m;
- b: ist eine ganze Zahl von 1 bis m-1;
- c: ist eine ganze Zahl von 1 bis m-2;
- d, e, f: sind jeweils unabhängig voneinander eine ganze Zahl von 0 bis 6-m;
- n: ist eine ganze Zahl von 3 bis 12,
wobei die Symbole R¹, R², R³ und ~ folgende Bedeutung haben:
- ∼: ist eine Bindung an das M-Atom;
- R¹: ist gleich oder verschieden lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O)(C₁-C₁₈-Alkyl),
wobei R¹ unsubstituiert oder mit 1 bis 3 Vertretern aus der Gruppe OH, O(C₁-C₁₈-Alkyl), O(C₂-C₁₈Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl), C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert sind;
- R², R³: sind unabhängig voneinander gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl,
wobei Alkyl, Alkenyl, Alkinyl, Cycloalkyl, Aryl in R², R³ jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aryl), S(O)₂OH, S(O)₂O(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert sind.

Die erfindungsgemäß verwendeten einen oder mehreren Metallverbindungen haben die Formel (A), (B) oder (C). Bevorzugt ist die Verwendung einer oder mehrerer Metallverbindungen der Formel (A) oder (B). Besonders bevorzugt ist die Verwendung einer oder mehrerer Metallverbindungen der Formel (A).

In einer Ausführungsform wird eine (1) Metallverbindung der Formel (A), (B) oder (C) verwendet, was im Rahmen der Erfindung bedeutet, dass >95 Gew.-%, bevorzugt >97 Gew.-%, besonders bevorzugt >98 Gew.-%, ganz besonders bevorzugt >99 Gew.-% der verwendeten Metallverbindungen eine (1) Metallverbindung der Formel (A), (B) oder (C) ist. Bevorzugt wird (1) Metallverbindung der Formel (A) verwendet.

Eine weitere Ausführungsform betrifft die Verwendung von mehreren, insbesondere 2 oder 3 Metallverbindungen der Formel (A), (B) oder (C). Bevorzugt handelt es sich bei 2 verwendeten Metallverbindungen um jeweils eine Metallverbindung der Formeln (A) und (B) oder um jeweils eine Metallverbindung der Formeln (A) und (C), besonders bevorzugt um jeweils eine Metallverbindung der Formeln (A) und (B). Bevorzugt handelt es sich bei 3 verwendeten Metallverbindungen um jeweils eine Metallverbindung der Formeln (A), (B) und (C).

Das Gewichtsverhältnis der einen oder mehreren Metallverbindungen der Formel (A) zu den einen oder mehreren Metallverbindungen der Formel (B) beträgt im Allgemeinen 40:60 bis 100:0, vorzugsweise 60:40 bis 100:0, besonders bevorzugt 80:20 bis 100:0, ganz besonders bevorzugt 90:10 bis 100:0.

Das Gewichtsverhältnis der einen oder mehreren Metallverbindungen der Formel (A) zu den einen oder mehreren Metallverbindungen der Formel (C) beträgt im Allgemeinen 90:10 bis 100:0, vorzugsweise 95:5 bis 100:0, besonders bevorzugt 98:1 bis 100:0, ganz besonders bevorzugt 99:1 bis 100:0.

Erfindungsgemäß handelt es sich bei einer Metallverbindung der Formel (A) um eine einkernige Metallverbindung, also um eine Metallverbindung mit einem (1) Metallzentrum.

Bei einer Metallverbindung der Formel (B) handelt es sich im Rahmen der Erfindung um eine zweikernige Metallverbindung, also um eine Metallverbindung mit zwei Metallzentren.

Erfindungsgemäß handelt es sich bei einer Metallverbindung der Formel (C) um eine mehrkernige Metallverbindung. Im Rahmen der Erfindung versteht man hierunter eine Metallverbindung mit n Metallzentren, wobei n im Bereich von 3 bis 12, vorzugsweise 3 bis 10, besonders bevorzugt 3 bis 7, ganz besonders bevorzugt 3 bis 5 liegt.

Die Bedeutung der Symbole und Indizes in den Formeln (A), (B) und (C) wird nachfolgend näher erläutert.

M ist ein Metallzentrum in einer Metallverbindung der Formel (A), (B) oder (C). In einer Metallverbindung der Formel (A) wird das Metallzentrum mit M^{A} bezeichnet. In einer Metallverbindung der Formel (B) wird das Metallzentrum mit M^{B} bezeichnet. In einer Metallverbindung der Formel (C) wird das Metallzentrum mit M^{C} bezeichnet.

X, Y und L sind an das Metallzentrum M gebundene Liganden. Bei X und Y handelt es sich um anionische Liganden, wohingegen L ein neutraler Ligand ist. Dem Fachmann ist bekannt, was unter einem anionischen Liganden sowie unter einem neutralen Liganden zu verstehen ist.

m ist die Summe der Anzahl der Liganden X und der Anzahl der Liganden Y.
a ist die Anzahl der Liganden X in der Formel (A).
   (m-a) ist die Anzahl der Liganden Y in der Formel (A).
b ist die Anzahl der Liganden X in der Formel (B).
   (m-b-1) ist die Anzahl der Liganden Y in der Formel (B).
c ist die Anzahl der Liganden X in der Formel (C).
   (m-c-2) ist die Anzahl der Liganden Y in der Formel (C).
d ist die Anzahl der Liganden L in der Formel (A); e ist die Anzahl der Liganden L in der Formel (B); f ist die Anzahl der Liganden L in der Formel (C).
n ist die Anzahl der Repetiereinheiten in der Formel (C).

Als Metallzentren M eignen sich Sn (Zinn), Ti (Titan), Zr (Zirkonium), Hf (Hafnium), Fe (Eisen) oder Zn (Zink). Bevorzugt sind Sn, Ti, Fe oder Zn. Besonders bevorzugt sind Sn oder Fe. Ganz besonders bevorzugt ist Sn.

Im Rahmen der Erfindung liegen die Sn-, Ti-, Zr- und Hf-Zentren in der Oxidationsstufe +IV, das Fe-Zentrum in der Oxidationsstufe +III und das Zn-Zentrum in der Oxidationsstufe +II vor. Dem Fachmann ist bekannt, wie die Oxidationsstufe eines Metallzentrums ermittelt wird.

Handelt es sich bei einer erfindungsgemäß verwendeten Metallverbindung um eine zweioder mehrkernige Metallverbindung der Formel (B) bzw. (C), so sind die 2 bzw. n Metallzentren M gleich oder verschieden. Bevorzugt sind die 2 bzw. n Metallzentren M gleich.

Erfindungsgemäß ist der Ligand X ein Ligand ∼SR¹.

Das Symbol - in der Formel ∼SR¹ ist eine Bindung an das Metallzentrum M. Hierdurch wird zum Ausdruck gebracht, dass der Ligand X durch mindestens ein Schwefelatom an das Metallzentrum M gebunden ist.

Als Substituenten R¹ eignen sich lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O(C₁-C₁₈-Alkyl).

Bevorzugte Substituenten R¹ sind lineares oder verzweigtes C₁-C₁₈-Alkyl, C₃-C₁₀-Cyclo-alkyl, C₆-C₁₀-Aryl oder C(O)(C₁-C₁₂-Alkyl).

Besonders bevorzugte Substituenten R¹ sind lineares oder verzweigtes C₁-C₁₂-Alkyl, Phenyl oder C(O)(C₁-C₆-Alkyl).

Ganz besonders bevorzugte Substituenten R¹ sind lineares oder verzweigtes C₁-C₁₂-Alkyl.

Die Substituenten R¹ sind unsubstituiert oder mit 1 bis 3 Vertretern aus der Gruppe OH, O(C₁-C₁₈-Alkyl), O(C₂-C₁₈-Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl), C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert.

Bevorzugt sind die Substituenten R¹ unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)(C₁-C₁₈-Alkyl), C(O)(C₆-C₁₀-Aryl), C(O)O(C₁-C₁₈-Alkyl), C(O)O(C₆-C₁₀-Aryl), S(O)₂O(C₁-C₁₈-Alkyl), S(O₂O(C₆-C₁₀-Aryl), C₁-C₁₈-Alkyl, C₆-C₁₀-Aryl und Halogen substituiert.

Besonders bevorzugt sind die Substituenten R¹ mit 1 bis 2 Vertretern aus der Gruppe OH, O(C₁-C₁₂-Alkyl), OC(O)(C₁-C₁₂-Alkyl), C(O)(C₁-C₁₂-Alkyl), C(O)O(C₁-C₁₂-Alkyl), C(O)O(C₆-C₁₀-Aryl) und C₁-C₁₂-Alkyl substituiert.

Ganz besonders bevorzugt sind die Substituenten R¹ mit 1 bis 2 Vertretern aus der Gruppe OH und C(O)O(C₁-C₈-Alkyl) substituiert.

Enthält eine erfindungsgemäß verwendete Metallverbindung mehrere Liganden X bzw. ∼SR¹, so sind die Substituenten R¹ gleich oder verschieden. Bevorzugt sind die Substituenten R¹ gleich.

Als Liganden Y eignen sich Halogen, OR², OC(O)R², OS(O)₂R², NR²R³, NR²C(O)R³, NR²S(O)₂R³, OP(O)(OR²)(OR³), OP(O)(OR²)R³ oder OP(O)R²R³.

Bevorzugte Liganden Y sind Halogen, OR², OC(O)R², OS(O)₂R², OP(O)(OR²)(OR³), OP(O)(OR²)R³ oder OP(O)R²R³.

Besonders bevorzugte Liganden Y sind Halogen, OR² oder OC(O)R².

Ganz besonders bevorzugte Liganden Y sind Cl oder O(C₁-C₁₈-Alkyl).

Enthält eine erfindungsgemäß verwendete Metallverbindung mehrere Liganden Y, so sind die mehreren Liganden Y gleich oder verschieden. Bevorzugt sind die mehreren Liganden Y gleich.

Halogen bedeutet im Rahmen der Erfindung Fluor, Chlor, Brom oder Iod, vorzugsweise Fluor, Chlor oder Brom, besonders bevorzugt Chlor oder Brom, ganz besonders bevorzugt Chlor.

Als Substituenten R², R³ eignen sich unabhängig voneinander H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl.

Bevorzugte Substituenten R², R³ sind unabhängig voneinander lineares oder verzweigtes C₁-C₁₈-Alkyl, C₃-C₁₀-Cycloalkyl oder C₆-C₁₀-Aryl.

Besonders bevorzugte Substituenten R², R³ sind unabhängig voneinander lineares oder verzweigtes C₁-C₁₈-Alkyl.

Ganz besonders bevorzugte Substituenten R², R³ sind unabhängig voneinander lineares oder verzweigtes C₁-C₁₈-Alkyl.

Alkyl, Alkenyl, Alkinyl, Cycloalkyl, Aryl in den Substituenten R², R³ sind jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aᵣyl), S(O)₂OH, S(O)₂(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert.

Bevorzugt sind Alkyl, Alkenyl, Alkinyl, Cycloalkyl, Aryl in den Substituenten R², R³ jeweils unabhängig voneinander unsubstituiert oder mit 1 bis 2 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), C(O)(C₁-C₁₈-Alkyl), C(O)(C₆-C₁₀-Aryl), C(O)O(C₁-C₁₈-Alkyl), C(O)O(C₆-C₁₀-Aryl), C₁-C₁₈-Alkyl, C₆-C₁₀-Aryl, Halogen, CF₃ und CN substituiert.

Besonders bevorzugt sind Alkyl, Alkenyl, Alkinyl, Cycloalkyl, Aryl in den Substituenten R², R³ jeweils unabhängig voneinander unsubstituiert oder mit 1 bis 2 Vertretern aus der Gruppe OH, O(C₁-C₁₂-Alkyl), O(C₆-Aryl), C(O)O(C₁-C₁₂-Alkyl), C(O)O(C₆-Aryl), C₁-C₁₂-Alkyl, C₆-Aryl, Halogen und CF₃ substituiert.

Ganz besonders bevorzugt sind Alkyl, Alkenyl, Alkinyl, Cycloalkyl, Aryl in den Substituenten R², R³ unsubstituiert.

In einer Ausführungsform sind die Substituenten R² und R³ gleich.
In einer weiteren Ausführungsform sind die Substituenten R² und R³ verschieden.

Als Liganden L eignen sich zum Beispiel C₃-C₆-Ketone, C₃-C₆-Ester, C₄-C₈-Ether, C₁-C₆-Monoalkohole, C₅-C₆-Diketone, C₅-C₆-Diester, C₂-C₆-Dialkohole, C₅-C₆-Ketoester, C₅-C₆-Hydroxyketone, C₅-C₆-Hydroxyester, Phosphine oder Phosphite.

Enthält eine erfindungsgemäß verwendete Metallverbindung mehrere Liganden L, so sind die mehreren Liganden L gleich oder verschieden.

Weiterhin bevorzugt, besonders bevorzugt, ganz besonders bevorzugt bilden zwei Vertreter aus der Gruppe X und Y gemeinsam zusammen mit dem M-Atom, an das sie gebunden sind, einen Ring.

Vor dem Hintergrund, dass m die Anzahl der anionischen Liganden ist, hängt m folgendermaßen von der Oxidationsstufe des jeweiligen Metallzentrums M ab:
Die Anzahl der anionischen Liganden m ist 2, wenn die Oxidationsstufe des Metallzentrums M +II ist. Da ein Zn-Zentrum erfindungsgemäß in der Oxidationsstufe +II vorliegt, ist m 2, wenn M Zn ist.

Die Anzahl der anionischen Liganden m ist 3, wenn die Oxidationsstufe des Metallzentrums M +III ist. Da ein Fe-Zentrum erfindungsgemäß in der Oxidationsstufe +III vorliegt, ist m 3, wenn M Fe ist.

Die Anzahl der anionischen Liganden m ist 4, wenn die Oxidationsstufe des Metallzentrums M +IV ist. Da ein Sn-, Ti-, Zr- oder Hf-Zentrum erfindungsgemäß in der Oxidationsstufe +IV vorliegt, ist m 4, wenn M Sn, Ti, Zr oder Hf ist.

Erfindungsgemäß ist die Koordinationszahl des Metallzentrums M eine ganze Zahl zwischen m und 6. Bevorzugt beträgt die Koordinationszahl 4 oder 6.

Da m die Anzahl der anionischen Liganden ist und die Koordinationszahl des Metallzentrums M maximal 6 ist, beträgt die maximale Anzahl der optionalen neutralen Liganden 6-m.

In einer Ausführungsform handelt es sich bei einer erfindungsgemäß verwendeten Metallverbindung um eine Zinkverbindung der Formel (A-II), (B-II),

XₐY₍₂₋ₐ₎L_{d}Zn (A-II)

[XLₑZn]₂O (B-II)

wobei
- a: 1 oder 2 ist;
- d, e: unabhängig voneinander 0, 1, 2, 3 oder 4 sind.

In einer weiteren Ausführungsform handelt es sich bei einer erfindungsgemäß verwendeten Metallverbindung um eine Eisenverbindung der Formel (A-III), (B-III) oder (C-III),

XₐY₍₃₋ₐ₎L_{d}Fe (A-III)

[X_{b}Y_{(2-b)}LₑFe]₂O (B-III))

[Fe(XL_{f})O]ₙ (C-III)

wobei
- a: 1, 2 oder 3 ist;
- b: 1 oder 2 ist;
- d, e, f: jeweils unabhängig voneinander 0, 1, 2 oder 3 sind.

In einer Ausführungsform handelt es sich bei einer erfindungsgemäß verwendeten Metallverbindung um eine Metall(IV)-verbindung der Formel (A-IV), (B-IV) oder (C-IV),

XₐY₍₄₋ₐ₎L_{d}M^{A}(IV) (A-IV)

[X_{b}Y_{(3-b)}LₑM^{B}(IV)]₂O (B-IV)

[M^{C}(IV)(X_{c}Y_{(2-c)}L_{f})O]ₙ (C-IV)

wobei
- a: 1, 2, 3 oder 4 ist;
- b: 1, 2 oder 3 ist;
- c: 1 oder 2 ist;
- d, e, f: jeweils unabhängig voneinander 0, 1 oder 2 sind.

Eine bevorzugte Ausführungsform betrifft die erfindungsgemäße Verwendung einer oder mehrerer Zinnverbindungen der Formel (A-1), (B-1) oder (C-1),

XₐY₍₄₋ₐ₎L_{d}Sn (A-1)

(X_{b}Y_{(3-b)}LₑSn)₂O (B-1)

[Sn(X_{c}Y_{(2**-**c)}L_{f})O]ₙ (C-1)

wobei
- a: 1, 2, 3 oder 4 ist;
- b: 1, 2 oder 3 ist;
- c: 1 oder 2 ist;
- d, e, f: jeweils unabhängig voneinander 0, 1 oder 2 sind.

Bevorzugt haben die Symbole und Indizes in den Formeln (A-1), (B-1) oder (C-1) folgende Bedeutung:
- Y: ist bevorzugt gleich oder verschieden Halogen, OR², OC(O)R², OS(O)₂R², OP(O)(OR²)(OR³), OP(O)(OR²)R³ oder OP(O)R²R³.

Weiterhin bevorzugt bilden zwei Vertreter aus der Gruppe X und Y gemeinsam zusammen mit dem Sn-Atom, an das sie gebunden sind, einen Ring.
- a: ist bevorzugt 1, 2, 3 oder 4.
- b: ist bevorzugt 1, 2 oder 3.
- c: ist bevorzugt eine 1 oder 2.
- d, e, f: sind bevorzugt jeweils unabhängig voneinander 0, 1 oder 2.
- n: ist bevorzugt eine ganze Zahl von 3 bis 10.
- R¹: ist bevorzugt gleich oder verschieden lineares oder verzweigtes C₁-C₁₈-Alkyl, C₃-C₁₀-Cycloalkyl, C₆-C₁₀-Aryl oder C(O)(C₁-C₁₂-Alkyl),
wobei Alkyl, Cycloalkyl, Aryl in R¹ jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)(C₁-C₁₈-Alkyl), C(O)(C₆-C₁₀-Aryl), C(O)O(C₁-C₁₈-Alkyl), C(O)O(C₆-C₁₀-Aryl), S(O)₂O(C₁-C₁₈=Alkyl), S(O)₂O(C₆-C₁₀-Aryl), C₁-C₁₈-Alkyl, C₆-C₁₀-Aryl und Halogen substituiert sind.
- R²: ist bevorzugt gleich oder verschieden lineares oder verzweigtes C₁-C₁₈-Alkyl, C₃-C₁₀-Cycloalkyl oder C₆-C₁₀-Aryl,
wobei Alkyl, Cycloalkyl, Aryl in R² jeweils unabhängig voneinander unsubstituiert oder mit 1 bis 2 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), C(O)(C₁-C₁₈-Alkyl), C(O)(C₆-C₁₀-Aryl), C(O)O(C₁-C₁₈-Alkyl), C(O)O(C₆-C₁₀-Aryl), C₁-C₁₈-Alkyl, C₃-C₁₀-Cycloalkyl, C₆-C₁₀-Aryl, Halogen, CF₃ und CN substituiert sind.

Bevorzugt sind Metallverbindungen der Formel (A-1), (B-1) oder (C-1), in denen alle Symbole und Indizes die bevorzugten Bedeutungen haben.

Besonders bevorzugt haben die Symbole und Indizes in den Formeln (A-1), (B-1) oder (C-1) folgende Bedeutung:
- Y: ist besonders bevorzugt gleich Halogen, OR² oder OC(O)R².

Weiterhin besonders bevorzugt bilden zwei Vertreter aus der Gruppe X und Y gemeinsam zusammen mit dem Sn-Atom, an das sie gebunden sind, einen Ring.
- a: ist besonders bevorzugt 1, 2, 3 oder 4.
- b: ist besonders bevorzugt 1, 2 oder 3.
- c: ist besonders bevorzugt 1 oder 2.
- d, e, f: sind besonders bevorzugt 0.
- n: ist besonders bevorzugt eine ganze Zahl von 3 bis 7.
- R¹: ist besonders bevorzugt gleich lineares oder verzweigtes C₁-C₁₂-Alkyl, Phenyl oder C(O)(C₁-C₆-Alkyl),
wobei Alkyl in R¹ mit 1 bis 2 Vertretern aus der Gruppe OH, O(C₁-C₁₂-Alkyl), OC(O)(C₁-C₁₂-Alkyl), C(O)(C₁-C₁₂-Alkyl), C(O)O(C₁-C₁₂-Alkyl), C(O)O(C₆-C₁₀-Aryl) und C₁-C₁₂-Alkyl substituiert sind.
- R²: ist besonders bevorzugt gleich lineares oder verzweigtes C₁-C₁₈-Alkyl,
wobei Alkyl in R² unsubstituiert oder mit 1 bis 2 Vertretern aus der Gruppe OH, O(C₁-C₁₂-Alkyl), O(C₆-Aryl), C(O)O(C₁-C₁₂-Alkyl), C(O)O(C₆-Aryl), C₁-C₁₂-Alkyl, C₆-Aryl, Halogen und CF₃ substituiert sind.

Besonders bevorzugt sind Metallverbindungen der Formel (A-1), (B-1) oder (C-1), in denen alle Symbole und Indizes die besonders bevorzugten Bedeutungen haben.

Ganz besonders bevorzugt haben die Symbole und Indizes in den Formeln (A-1), (B-1) oder (C-1) folgende Bedeutung:
- Y: ist ganz besonders bevorzugt gleich Cl oder O(C₁-C₁₈-Alkyl).

Weiterhin ganz besonders bevorzugt bilden zwei Vertreter aus der Gruppe X und Y gemeinsam zusammen mit dem Sn-Atom, an das sie gebunden sind, einen Ring.
- a: ist ganz besonders bevorzugt 1, 2, 3 oder 4.
- b: ist ganz besonders bevorzugt 1, 2 oder 3.
- c: ist ganz besonders bevorzugt 1 oder 2.
- d, e, f: sind ganz besonders bevorzugt 0.
- n: ist ganz besonders bevorzugt eine ganze Zahl von 3 bis 5.
- R¹: ist ganz besonders bevorzugt gleich lineares oder verzweigtes C₁-C₁₂-Alkyl,
wobei Alkyl in R¹ mit 1 bis 2 Vertretern aus der Gruppe OH und C(O)O(C₁-C₈-Alkyl) substituiert sind.
- R²: ist ganz besonders bevorzugt gleich lineares oder verzweigtes C₁-C₁₈-Alkyl, wobei Alkyl in R² unsubstituiert sind.

Ganz besonders bevorzugt sind Metallverbindungen der Formel (A-1), (B-1) oder (C-1), in denen alle Symbole und Indizes die ganz besonders bevorzugten Bedeutungen haben.

Sofern nicht anders angegeben, umfasst der Begriff Alkyl lineares oder verzweigtes Alkyl.

Eine weitere bevorzugte Ausführungsform betrifft die erfindungsgemäße Verwendung einer oder mehrerer Metallverbindungen der Formel (A), (B) oder (C), wobei
- M^{A}: Sn, Ti, Zr, Hf, Fe oder Zn ist;
- M^{B}: gleich oder verschieden Sn, Ti, Zr, Hf oder Fe ist;
- M^{C}: gleich oder verschieden Sn, Ti, Zr oder Hf ist;
- a: eine ganze Zahl von 1 bis m-1 ist;
- b: eine ganze Zahl von 1 bis m-2 ist;
- c: 1 ist,
wobei die übrigen Symbole die oben angegebenen Bedeutungen haben.

Eine weitere besonders bevorzugte Ausführungsform betrifft die erfindungsgemäße Verwendung einer oder mehrerer Metallverbindungen der Formel (A), (B) oder (C), wobei Y OR², insbesondere O(C₁-C₁₈-Alkyl), ist.

Eine weitere ganz besonders bevorzugte Ausführungsform betrifft die erfindungsgemäße Verwendung einer oder mehrerer Metallverbindungen der Formel (A), (B) oder (C), wobei M^{A}, M^{B} und M^{C} Sn sind und wobei Y OR², insbesondere O(C₁-C₁₈-Alkyl), ist.

Eine weitere bevorzugte Ausführungsform betrifft die erfindungsgemäße Verwendung einer oder mehrerer Metallverbindungen der Formel (A), (B) oder (C), wobei M^{A}, M^{B} und M^{C} Sn sind.

Eine bevorzugte Ausführungsform betrifft die erfindungsgemäße Verwendung einer oder mehrerer Metallverbindungen der Formel (A), (B) oder (C), wobei M^{A}, M^{B} und M^{C} Sn sind und wobei
- a: eine ganze Zahl von 1 bis m-1 ist;
- b: eine ganze Zahl von 1 bis m-2 ist;
- c: 1 ist.

Die erfindungsgemäß verwendeten Metallverbindungen sind entweder kommerziell erhältlich oder können in Anlehnung an literaturbekannte Methoden hergestellt werden (siehe z.B. WO 2011/051465 oder WO 2009/132784).

In einer Ausführungsform sind die erfindungsgemäß verwendeten Metallverbindungen erhältlich durch Umsetzung von
(i) einem oder mehreren Metallsalzen der Formel (D),

   MZₘ (D)

   wobei
   - M: Sn, Ti, Zr, Hf, Fe oder Zn ist;
   - Z: Halogen, O(C₁-C₁₂-Alkyl) oder OCOCH₃ ist;
   - m: ist 2, wenn M Zn ist;
   3, wenn M Fe ist; und
   4, wenn M Sn, Ti, Zr, Hf ist;
   mit
(ii) 1 bis m Äquivalenten eines oder mehrerer Mercaptane der Formel (E),

   R¹SH (E)

   wobei
   - R¹: gleich oder verschieden lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O)(C₁-C₁₈-Alkyl) ist,
   wobei R¹ unsubstituiert oder mit 1 bis 3 Vertretern aus der Gruppe OH, O(C₁-C₁₈-Alkyl), O(C₂-C₁₈-Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl), C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert sind;
   und
(iii) m Äquivalenten eines oder mehrerer Alkoholate der Formel (F),

   R²OM* (F)

   wobei
   - M*: Li, Na, K, Mg, Ca oder Al ist;
   - R²: gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl ist,
   wobei Alkyl, Alkenyl, Alkinyl, Cycloalkyl, Aryl in R², R³ jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aᵣyl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aryl), S(O)₂OH, S(O)₂O(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert sind;
(iv) gegebenenfalls in Anwesenheit von 0,1 bis 11,0 Gew.-% H₂O, bezogen auf die einen oder mehreren Metallsalze der Formel (D).

In der Formel (D) ist Z bevorzugt Halogen oder O(C₁-C₄-Alkyl), besonders bevorzugt Cl, OCH₃, OC₂H₅, OC₃H₇ oder OC₄H₉, ganz besonders bevorzugt Cl.

Als Mercaptane der Formel (E) bevorzugt sind Mercaptane der Formeln (E1), (E2), (E3), (E4) und (E5).
E1:

   HS-(C₁-C₂-Alkyl)-CO₂R^{E1} (E1)

   mit R^{E1} = H, C₁-C₈-Alkyl 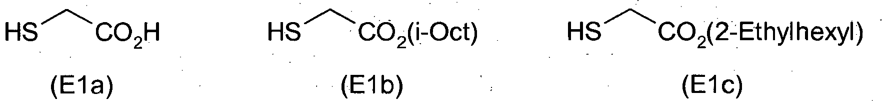 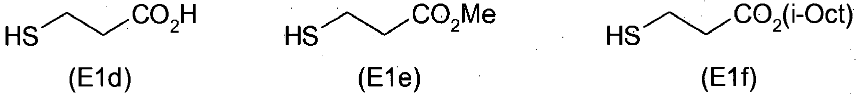
E2: 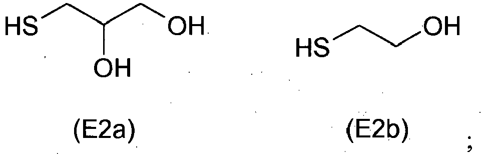
E3:

   (C₁-C₁₀-Alkyl)-SH (E3)

   n-C₁₀H₂₁SH (E3a)

   n-C₁₂H₂₅SH (E3b) .
E4: 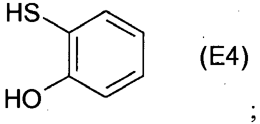
E5:

   CH₃COSH (E5)

Bevorzugte Verbindungen der Formel (E1) sind die Verbindungen (E1a), (E1b), (E1c), (E1d), (E1e) und (E1f).

Bevorzugte Verbindungen der Formel (E2) sind die Verbindungen (E2a) und (E2b).

Bevorzugte Verbindungen der Formel (E3) sind die Verbindungen (E3a) und (E3b).

Als Mercaptane der Formel (E) besonders bevorzugt sind Mercaptane der Formeln (E1b), (E1c), (E1e), (E1f), (E2a) und (E2b).

Als Mercaptane der Formel (E) ganz besonders bevorzugt sind Mercaptane der Formeln (E1b), (E1c), (E1e), (E1f) und (E2a).

In der Formel (F) ist M* bevorzugt Na, K oder Mg, besonders bevorzugt Na oder K, ganz besonders bevorzugt Na.

Das Verhältnis der Metallverbindungen (A), (B) und (C) zueinander kann z.B. durch Anoder Abwesenheit von Wasser bei der Herstellung beeinflusst werden. Im Allgemeinen gilt Folgendes: Je weniger Wasser bei der Herstellung anwesend ist, desto höher ist der Anteil an (A). Je mehr Wasser bei der Herstellung anwesend ist, desto höher ist der Anteil an (C).

Die Umsetzung der Verbindungen (D), (E) und (F) erfolgt in Anwesenheit oder Abwesenheit eines Lösungsmittels, vorzugsweise in Anwesenheit eines Lösungsmittels.

Wird die Umsetzung in Anwesenheit eines Lösungsmittels durchgeführt, so ist das Lösungsmittel insbesondere bevorzugt ein Alkohol der Formel (G),

R²OH (G),

wobei R² in der Formel (G) die gleiche Bedeutung wie R² in der Formel (F) hat.

Weitere bevorzugte Lösungsmittel sind Polyethylenglycole, Polypropylenglycole, Glycerin, Glycerincarbonat, C₁-C₅-Alkohole, 1,2-Propandiol, 1,3-Propandiol, Ethylenglycol, Diethylenglycol, 1,2-Butandiol, 1,3-Butandiol, 2,3-Butandiol, 1,4-Butandiol, Diethylenglycolmonomethylether, Diethylenglycolmonobutylether, Dipropylenglycol oder Mischungen davon. Bevorzugt sind auch weitere in der Polyurethanchemie übliche Lösungsmittel.

Im Allgemeinen erfolgt die Umsetzung der Verbindungen (D), (E) und (F) bei einer Temperatur im Bereich von 0 bis 120 °C, vorzugsweise 20 bis 100 °C, besonders bevorzugt 40 bis 80 °C über einen Zeitraum von 5 min bis 24 h, vorzugsweise 10 min bis 8 h, besonders bevorzugt 30 min bis 3 h zugegeben. Die Aufarbeitung wird nach dem Fachmann bekannten Methoden durchgeführt.

Gegenstand der Erfindung ist auch die Verwendung einer oder mehrerer Metallverbindungen, erhältlich durch das oben beschriebene Verfahren, als Katalysator zur Herstellung von Polymeren.

Die Erfindung betrifft auch Metallverbindungen der Formel (A), (B) oder (C),

XₐY(ₘ₋ₐ)L_{d}M^{A} (A)

(X_{b}Y_{(m-b-1)}LₑM^{B})₂O (B)

[M^{C}(X_{c}Y_{(m-c-2)}L_{f})O]ₙ (C)

als Katalysator zur Herstellung von Polymeren,
dadurch gekennzeichnet, dass die Symbole M^{A}, M^{B}, M^{C}, X, Y, L sowie die Indizes m, a, b, c, d, e, f, n folgende Bedeutung haben:
- M^{A}: ist Sn;
- M^{B}: ist Sn;
- M^{C}: ist Sn;
- X: ist ∼SR¹;
- Y: ist OR²;
- L: ist ein neutraler Ligand und gleich oder verschieden;
oder mindestens zwei Vertreter aus der Gruppe X und Y bilden gemeinsam zusammen mit dem
M-Atom, an das sie gebunden sind, mindestens einen Ring;
- m: ist 4;
- a: ist eine ganze Zahl von 1 bis m-1;
- b: ist eine ganze Zahl von 1 bis m-2;
- c: ist 1;
- d, e, f: sind jeweils unabhängig voneinander eine ganze Zahl von 0 bis 6-m;
- n: ist eine ganze Zahl von 3 bis 12,
wobei die Symbole R¹, R², R³ und ∼ folgende Bedeutung haben:
- ∼: ist eine Bindung an das M-Atom;
- R¹: ist gleich oder verschieden lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O)(C₁-C₁₈-Alkyl),
wobei R¹ unsubstituiert oder mit 1 bis 3 Vertretern aus der Gruppe OH, O(C₁-C₁₈-Alkyl), O(C₂-C₁₈-Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl),C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert sind;
- R²: ist gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl,
wobei Alkyl, Alkenyl, Alkinyl, Cycloalkyl, Aryl in R² jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aryl), S(O)₂OH, S(O)₂O(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert sind.

Erfindungsgemäß werden die eine oder mehreren Metallverbindungen der Formel (A), (B) oder (C) als Katalysator zur Herstellung von Polymeren verwendet.

Bevorzugt ist das Polymer eine Polyisocyanat-Polyadditionsverbindung, ein Polyester oder ein Polysiloxan, besonders bevorzugt eine Polyisocyanat-Polyadditionsverbindung.

Bevorzugt ist die Polyisocyanat-Polyadditionsverbindung ein Polyurethan.

Weiterhin bevorzugt ist das Polymer, insbesondere die Polyisocyanat-Polyadditionsverbindung, besonders bevorzugt das Polyurethan, ein Elastomer.

Gegenstand der Erfindung ist auch ein Verfahren zur Herstellung von Polyisocyanat-Polyadditionsverbindungen, dadurch gekennzeichnet, dass eine oder mehrere Metallverbindungen der Formel (A), (B) oder (C) als Katalysator verwendet werden.

Die Herstellung der Polyisocyanat-Polyadditionsverbindungen erfolgt durch dem Fachmann bekannte Verfahren. Je nach Anwendung werden die reaktiven Komponenten bei Raumtemperatur oder vortemperiert vermischt. Diese können bei Verwendung der erfindungsgemäßen Katalysatoren über einen deutlich verlängerten Zeitraum verarbeitet werden, da die Topf- bzw. Fließzeit im Vergleich zur Verwendung von nicht latenten Katalysatorsystemen deutlich verlängert ist (z.B. Applikation von 2K-Polyurethanlacken). Vorheiztemperaturen liegen bevorzugt in einem Bereich von 30 bis 120 °C, besonders bevorzugt 30 bis 60 °C. Die Aktivierung der erfindungsgemäßen Katalysatoren erfolgt durch thermische Energie. Der Eintrag kann intern durch beginnende exotherme Reaktion oder extern, beispielsweise durch vortemperierte Formteile, erfolgen. Die Härtungsreaktion wird bevorzugt bei einer Temperatur im Bereich von 50 bis 120 °C, besonders bevorzugt 60 bis 90 °C durchgeführt.

Es können Härtungssysteme mit deulich verlängerten Verarbeitungszeiten und/oder kürzeren Härtungszeiten und/oder niedrigeren Härtungstemperaturen und/oder höheren Umsetzungsgraden formuliert werden.
Es können aber auch höhere Reaktionstemperaturen gewählt werden, um eine zusätzliche thermische Beschleunigung der Härtungssysteme zu erreichen.

Die für die Herstellung von Polyisocyanat-Polyadditionsverbindungen, insbesondere Polyurethanen geeigneten Polyisocyanate (a) sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon. Beispiele für geeignete aliphatische bzw. cycloaliphatische Polyisocyanate sind Dioder Triisocyanate, wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) und cyclische Systeme, wie z.B. 4,4'-Methylen-bis(cyclohexylisocyanat), 3,5,5-Trimethyl-1-isocyanato-3-isocyanatomethylcyclohexan (Isophorondiisocyanat, IPDI), sowie ω.ω'-Diisocyanato-1,3-dimethylcyclohexan (H₆XDI). Als aromatische Polyisocyanate können z.B. 1,5-Naphthalindiisocyanat, Diisocyanatodiphenylmethan (2,2'-, 2,4'-und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI) eingesetzt werden. Des Weiteren können TODI (3,3'-Dimethyl-4,4'-biphenyldiisocyanat), PPDI (1,4-Paraphenylendiisocyanat) und CHDI (Cyclohexyldiisocyanat) verwendet werden.

Überdies können aber auch die an sich bekannten Folgeprodukte der vorgenannten organischen aliphatischen, cycloaliphatischen, aromatischen oder heterocyclischen Polyisocyanate mit Carbodiimid, Uretonimin-, Uretdion-, Allophanat-, Biuret- und/oder Isocyanurat-Struktur, sowie Präpolymere, die durch Umsetzung des Polyisocyanats mit Verbindungen mit gegenüber Isocyanatgruppen reaktiven Gruppen erhalten werden, eingesetzt werden.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitrönensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkyl morpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Poly-urethan/Polyharnstoff einbaufähige Farbstoffe (die also über Zerewitinoff-aktive Wasserstoffatome verfügen) und/oder Farbpigmente enthalten.

Als NCO-reaktive Verbindungen (b) können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3-bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungsoder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Die als Komponente (b) einsetzbaren Polyetheramine sind insbesondere Diamine oder Triamine. Derartige Verbindungen werden beispielsweise von der Firma Huntsman unter der Bezeichnung Jeffamine® bzw. von der Firma BASF als Polyetheramine vertrieben.

Als Vernetzerkomponente bzw. Kettenverlängerer kommen meist kurzkettige Polyole bzw. Polyamine zum Einsatz. Typische Kettenverlängerer sind Diethyltoluoldiamin (DETDA), 4,4'-Methylenbis-(2,6-diethyl)-anilin (MDEA), 4,4'-Methylenbis-(2,6-diisopropyl)-anilin (MDIPA), 4,4'-Methylen-bis-(3-chloro-2,6-diethyl)-anilin (MCDEA), Dimethylthiotoluoldiamin (DMTDA, Ethacure® 300), N,N'-Di(sec-butyl)-amino-biphenylmethan (DBMDA, Unilink® 4200) oder N,N'-Di-sec-butyl-p-phenylendiamin (Unilink® 4100), 3,3'-Dichloro-4,4'-diamino-diphenylmethan (MBOCA), Trimethylenglykol-di-p-aminobenzoat (Polacure 740M). Aliphatische aminische Kettenverlängerer können ebenfalls eingesetzt oder mitverwendet werden. 1,3-Propandiol, 1,4-Butandiol, 2,3-Butandiol, 1,5-Pentandiol, 1,6-Hexandiol und HQEE (Hydrochinon-di(β-hydroxyethyl)ether) sind ebenfalls einsetzbar.

Das Verfahren zur Herstellung der Polyisocyanat-Polyadditionsprodukte kann in Gegenwart üblicher Rheologieverbesserer, Stabilisatoren, UV-Schutzmittel, Katalysatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Bevorzugt ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Typische Schäummittel sind Fluorkohlenwasserstoffe, Pentan, Cyclopentan, Wasser und/oder Kohlenstoffdioxid.

Die latenten Katalysatoren können zur Herstellung von Weich- und Hartschäumen, Beschichtungen, Kleb- und Dichtstoffen, halbharten Schäumen, Integralschäumen, Sprühund Gießelastomeren, Harzen und Bindemitteln in der Polyurethan-Chemie sowie von thermoplastischen Polyurethanen eingesetzt werden.

Darüber hinaus können die erfindungsgemäßen Katalysatoren zur Herstellung von Silikonen und Polyestern eingesetzt werden.

Die Erfindung wird durch die nachfolgenden Beispiele näher erläutert.

### Beispiele

### A) Synthesebeispiele

### Beispiel 1 (Herstellung von Katalysator 1)

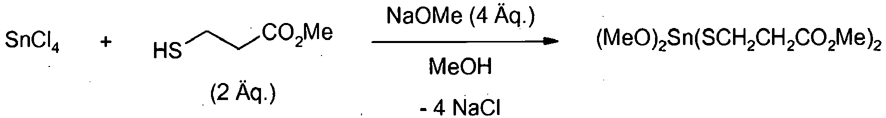

Zu einer Lösung von 102,5 g Zinntetrachlorid (0,3934 mol) in 500 g Methanol wurden 94,5 g 3-Mercaptopropionsäuremethylester (0,7868 mol) dosiert. Dann wurden 283,4 g einer 30%igen methanolischen Lösung von Natriummethylat (1,5736 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde eine hochviskose Flüssigkeit erhalten.

| | |
|---|---|
| FK der methanolischen Lösung [Gew.-%]: | ber.: 18,6 |
| | gef.: 20,7 |

Der FK-Wert gibt den Produktgehalt der methanolischen Lösung in Gew.-%, bezogen auf 100 g der Lösung, an. Dieser wird bestimmt, nachdem das Methanol wie oben beschrieben abdestilliert wurde (Rotationsverdampfer, 100 mbar, Wasserbad: 80 °C).

| | |
|---|---|
| Elementaranalyse [Gew.-%]: | Sn (ber.): 28,2 |
| | Sn (gef.): 28,0 |
| | Cl (ber.): 0,0 |
| | Cl (gef.): 0,1 |

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das überschüssige Methanol abdestilliert. Es wurde eine ca. 20%ige Lösung in Polyethylenglycol 400 erhalten.

### Beispiel 2 (Herstellung von Katalysator 2)

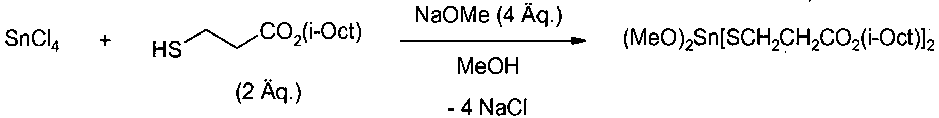

Zu einer Lösung von 102,5 g Zinntetrachlorid (0,3934 mol) in 500 g Methanol wurden 171,8 g 3-Mercaptopropionsäureisooctylester (0,7868 mol) dosiert. Dann wurden 283,4 g einer 30%igen methanolischen Lösung von Natriummethylat (1,5736 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde eine Flüssigkeit erhalten.

| | |
|---|---|
| FK der methanolischen Lösung [Gew.-%]: | ber.: 25,1 |
| | gef.: 25,9 |

| | |
|---|---|
| Elementaranalyse [Gew.-%]: | Sn (ber.): 19,3 |
| | Sn (gef.): 19,8 |
| | Cl (ber.): 0,0 |
| | Cl (gef.): 0,1 |

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das überschüssige Methanol abdestilliert. Es wurde eine ca. 20%ige Lösung in Polyethylenglycol 400 erhalten.

### Beispiel 3 (Herstellung von Katalysator 3)

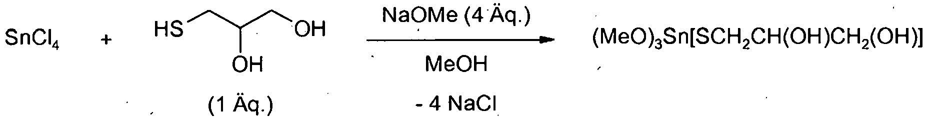

Zu einer Lösung von 102,5 g Zinntetrachlorid (0,3934 mol) in 500 g Methanol wurden 42,6 g 3-Mercapto-1,2-propandiol (0,3934 mol) dosiert. Dann wurden 283,4 g einer 30%igen methanolischen Lösung von Natriummethylat (1,5736 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde ein Feststoff erhalten.

| | |
|---|---|
| FK der methanolischen Lösung [Gew.-%]: | ber.: 15,0 |
| | gef.: 12,9 |

| | |
|---|---|
| Elementaranalyse [Gew.-%]: | Cl (ber.): 0,0 |
| | Cl (gef.): 0,1 |

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das überschüssige Methanol abdestilliert. Es wurde eine ca. 20%ige Lösung in Polyethylenglycol 400 erhalten.

### Beispiel 4 (Herstellung von Katalysator 4)

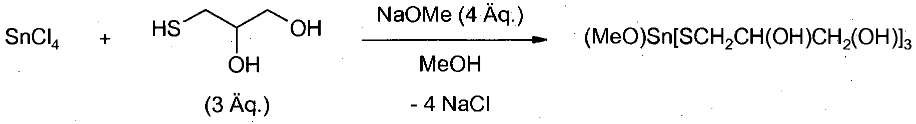

Zu einer Lösung von 102,5 g Zinntetrachlorid (0,3934 mol) in 500 g Methanol wurden 127,8 g 3-Mercapto-1,2-propandiol (1,1802 mol) dosiert. Dann wurden 283,4 g einer 30%igen methanolischen Lösung von Natriummethylat (1,5736 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde ein Feststoff erhalten.

| | |
|---|---|
| FK der methanolischen Lösung [Gew.-%]: | ber.: 20,2 |
| | gef.: 20,8 |

| | |
|---|---|
| Elementaranalyse [Gew.-%]: | Sn (ber.): 25,0 |
| | Sn (gef.): 24,8 |
| | Cl (ber.): 0,0 |
| | Cl (gef.): 0,2 |

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das überschüssige Methanol abdestilliert. Es wurde eine ca. 20%ige Lösung in Polyethylenglycol 400 erhalten.

### Beispiel 5 (Herstellung von Katalysator 5)

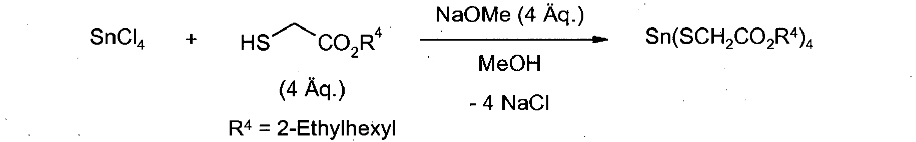

Zu einer Lösung von 102,5 g Zinntetrachlorid (0,3934 mol) in 500 g Methanol wurden 321,6 g Thioglykolsäure-2-ethylhexylester (1,5736 mol) dosiert. Dann wurden 283,4 g einer 30%igen methanolischen Lösung von Natriummethylat (1,5736 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde ein Feststoff erhalten.

| | |
|---|---|
| FK der methanolischen Lösung [Gew.-%]: | ber.: 33,0 |
| | gel.: 34,7 |

| | |
|---|---|
| Elementaranalyse [Gew.-%]: | Sn (ber.): 12,7 |
| | Sn (gef.): 12,7 |
| | Cl (ber.): 0,0 |
| | Cl (gef.): 0,1 |

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das überschüssige Methanol abdestilliert. Es wurde eine ca. 20%ige Lösung in Polyethylenglycol 400 erhalten.

### Beispiel 6 (Herstellung von Katalysator 6)

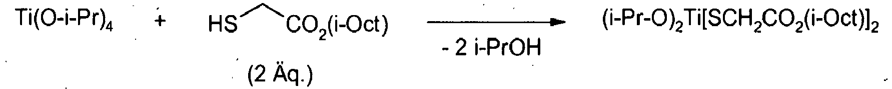

Zu 50 g Titantetraisopropoxid (0,1760 mol) wurden 71,9 g Thioglykolsäureisooctylester (0,3520 mol) dosiert. Dann wurden ca. 21,0 g Isopropanol unter vermindertem Druck (ca. 50 mbar) bei 80 °C abdestilliert. Es wurde 100,9 g Produkt erhalten, was dem theoretisch erwarteten Wert entspricht.

Für anwendungstechnische Untersuchungen wurde das Produkt 20%ig in Polyethylenglycol 400 umgelöst. Hierzu wurden 100 g Lösung mit der entsprechenden Menge Polyethylenglycol 400 gemischt und das Methanol abdestilliert. Es wurde eine ca. 20%ige Lösung in Polyethylenglycol 400 erhalten.

### Beispiel 7 (Herstellung von Katalysator 7)

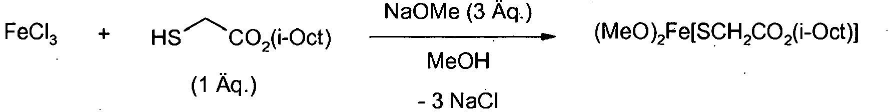

Zu einer Lösung von 81,1 g Eisen(III)-chlorid (0,500 mol) in 500 g Methanol wurden 102,2 g Thioglykolsäureisooctylester (0,500 mol) dosiert. Dann wurden 270,0 g einer 30%igen methanolischen Lösung von Natriummethylat (1,500 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde eine Flüssigkeit erhalten.

| | |
|---|---|
| FK der methanolischen Lösung [Gew.-%]: | ber.: 19,0 |
| | gef.: 15,8 |

| | |
|---|---|
| Elementaranalyse [Gew.-%]: | Fe (ber.): 2,7 |
| | Fe (gef.): 2,7 |
| | Cl (ber.): 0,0 |
| | Cl (gef.): 0,7 (Na-Gehalt: 0,4) |

158 g methanolische Lösung wurden in 100 g PEG 400 gelöst und das überschüssige Methanol abgezogen. Es wurde eine ca. 20%ige Lösung zur weiteren anwendungstechnischen Untersuchung erhalten.

### Beispiel 8 (Herstellung von Katalysator 8)

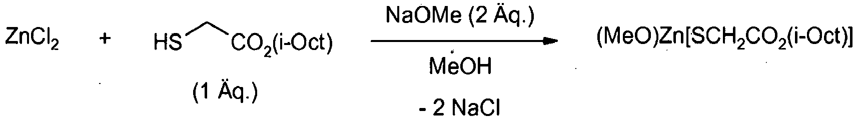

Zu einer Lösung von 68,2 g Zink(II)-chlorid (0,500 mol) in 500 g Methanol wurden 102,2 g Thioglykolsäureisooctylester (0,500 mol) dosiert. Dann wurden 180,0 g einer 30%igen methanolischen Lösung von Natriummethylat (1,000 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde eine Flüssigkeit erhalten.

| | |
|---|---|
| FK der methanolischen Lösung [Gew.-%]: | ber.: 18,9 |
| | gef.: 18,1 |

| | |
|---|---|
| Elementaranalyse [Gew.-%]: | Zn (ber.): 21,8 |
| | Zn (gef.): 21,6 |

138 g methanolische Lösung wurden in 100 g PEG 400 gelöst und das überschüssige Methanol abgezogen. Es wurde eine ca. 20%ige Lösung zur weiteren anwendungstechnischen Untersuchung erhalten.

### Beispiel 9 (Herstellung von Katalysator 9)

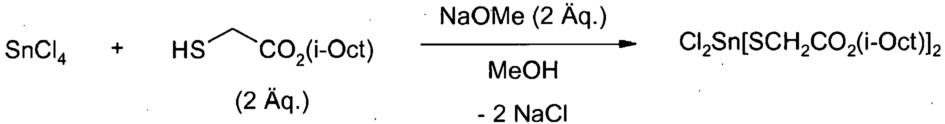

Zu einer Lösung von 102,5g Zinntetrachlorid (0,3934 mol) in 500 g Methanol wurden 321,6 g Thioglykolsäureisooctylester (0,7868 mol) dosiert. Dann wurden 141,7 g einer 30%igen methanolischen Lösung von Natriummethylat (0,7868 mol) zudosiert, wobei die Temperatur 60 °C nicht überschritt. Anschließend wurde für 1 h bei 60 °C gerührt. Die entstandene Lösung wurde vom NaCl-Niederschlag abdekantiert und das Methanol unter Verwendung eines Rotationsverdampfers (100 mbar, Wasserbad: 80 °C) abdestilliert. Es wurde eine Flüssigkeit erhalten.

| | |
|---|---|
| FK der methanolischen Lösung [Gew.-%]: | ber.: 27,4 |
| | gef.: 28,3 |

| | |
|---|---|
| Elementaranalyse [Gew.-%]: | Sn (ber.): 19,8 |
| | Sn (gef.): 19,8 |
| | Cl (ber.): 11,8 |
| | Cl (gef.): 11,2 |

Anwendungstechnische Untersuchungen wurden mit dem 100%igen Produkt durchgeführt.

### B) Anwendungsbeispiele

### a) Elastomerformulierungen - ein Vergleich erfindungsgemäßer Katalysatoren mit Katalysatoren des Standes der Technik

**Tabelle 1: Zusammensetzung der Elastomerformulierungen**

| **Komponente** | **Definition** | **Funktion** | **Menge [g]** |
|---|---|---|---|
| MDQ 23165 ^{a} | MDI-Ester ^{b} | Präpolymer | 100 |
| D 20 ^{a} | Esterpolyol | Kettenverlängerer | 180 |
| BDO 1,4 ^{a} | 1,4-Butandiol | Kettenverlängerer | variabel ^{c} |
| Katalysator | variabel ^{c} | Katalysator | variabel ^{c} |

| | | | |
|---|---|---|---|
| ^{a} kommerziell erhältlich von der Firma Baule ^{b} MDI = Diphenylmethan-4,4'-diisocyanat ^{c} siehe Tabelle 2 | | | |

Die Komponenten wurden auf 50 °C erhitzt und im Speedmixer DAC 400 FVZ (10s 1200 Upm / 80s 1750 Upm / 40s 1350 Upm / 10s 1000 Upm) gut vermischt und anschließend in ein Aluminiumschälchen (Durchmesser 5 cm / Höhe 1 cm) gegossen. Das Prüfschälchen wurde direkt für 30 min auf einer auf 90 °C temperierten Heizplatte gelagert. Nach Abkühlen auf 23 °C (innerhalb von ca. 15 min) wurde die Shore A-Härte des Prüfkörpers an der Ober- und Unterseite nach DIN 53505 bestimmt.

**Tabelle 2: Topfzeit der Elastomerformulierungen und Shore A-Härte der Elastomere**

| **Beispiel** | **Katalysator** | **Menge Katalysator [g]** | **Menge BDO [g]** | **Temperatur [°C]** | **PL^{d} [min]** | **Shore A (oben)** | **Shore A (unten)** |
|---|---|---|---|---|---|---|---|
| V1 | TK 218 ^{a} | 0,05 | 6,5 | 90 | 5 | 31 | 43 |
| V2 | Thor 535 ^{b} | 0,5 | 9,1 | 90 | 5 | 38 | 41 |
| 9 | 1^{c} | 4 | 8,6 | 80 | 6 | 35 | 45 |
| 10 | 1^{c} | 4 | 8,6 | 90 | 6 | 43 | 52 |
| 11 | 3^{c} | 7,5 | 7,8 | 70 | 13 | 24 | 39 |
| 12 | 3^{c} | 7,5 | 7,8 | 80 | 13 | 26 | 40 |
| 13 | 3^{c} | 7,5 | 7,8 | 90 | 13 | 26 | 36 |
| 14 | 3^{c} | 7,5 | 7,8 | 100 | 13 | 27 | 37 |
| 15 | 3^{c} | 10 | 6,0 | 70 | 12 | 29 | 45 |
| 16 | 3^{c} | 10 | 6,0 | 80 | 12 | 35 | 48 |
| 17 | 3^{c} | 10 | 6,0 | 90 | 12 | 42 | 45 |
| 18 | 3^{c} | 10 | 6,0 | 100 | 12 | 43 | 50 |

| | | | | | | | |
|---|---|---|---|---|---|---|---|
| ^{a} TIB KAT 218 (Dibutylzinndilaurat) der Firma TIB Chemicals ^{b} Thorcat 535 (Phenylneodecanoat) der Firma Thor Especialidades, S.A. ^{c} siehe Synthesebeispiele ^{d} Topfzeit ("pot life"); Zeit bis die Gelierung einsetzt | | | | | | | |

Ziel ist eine Shore A-Härte von ca. 40 nach Abkühlung (ca. 30 min nach Temperung), was eine akzeptable Entformbarkeit anzeigt (Vergleich mit Hg-Typ Thor 535). Auf der oberen Fläche erreichten die Prüfkörper eine etwa 15 K geringere Temperatur als direkt auf der Heizplatte. Die erfindungsgemäßen Katalysatoren erreichten deutlich höhere Shore A-Härten bei längeren Verarbeitungszeiten als Thor 535 bzw. TK 218.

### b) Überprüfung der Latenz durch Messung der Wärmeentwicklung in einem Gießharzmodellsystem (MDI-basierend)

**Tabelle 3: Zusammensetzung der Komponenten A und B des Gießharzmodellsystems**

| **Komponente** | | **Definition** | **Menge [g]** |
|---|---|---|---|
| **Komponente A** | Sovermol 750 ^{a} | verzweigter Polyether/-ester | 29,5 |
| | Desmophen 1155^{b} | Polyalkohol mit Ester- und Ethergruppen | 62 |
| | Katalysator | variabel ^{d} | variabel ^{d} |
| **Komponente B** | Desmodur VL^{c} | aromatisches Polyisocyanat auf Basis von MDI ^{e} | 42 |

| | | | |
|---|---|---|---|
| ^{a} kommerziell erhältlich von der Firma BASF ^{b} kommerziell erhältlich von der Firma Bayer ^{c} kommerziell erhältlich von der Firma Bayer ^{d} siehe Tabelle 4 ^{e} MDI = Diphenylmethan-4,4'-diisocyanat | | | |

Die Komponenten A und B wurden miteinander vermischt und die Temperatur der Mischung im Abstand von 1 Minute erfasst.

**Tabelle 4:**

| **Katalysator** | - | Thor 535^{a} | | TK 218^{b} | | 3^{c} | 1^{c} |
|---|---|---|---|---|---|---|---|
| **Katalysatormenge [Gew.-%^{d}]** | - | 0,5 | 0,25 | 0,05 | 0,1 | 0,5 | 0,5 |

| **Zeit [min]** | **Temperatur [°C]** | | | | | | |
|---|---|---|---|---|---|---|---|
| 0 | 50 | 50 | 50 | 50 | 50 | 50 | 50 |
| 1 | 50 | 56 | 49 | 50 | 64 | 50,1 | 51 |
| 2 | 53 | 87 | 49 | 52 | 87 | 52,8 | 59,8 |
| 3 | 57 | 128 | 57 | 56 | 94 | 58,2 | 70,2 |
| 4 | 59 | 134 | 75 | 60 | 99 | 70,9 | 89,3 |
| 5 | 62 | 135 | 90 | 64 | 101 | 89,2 | 106 |
| 6 | 64 | 134 | 95 | 67 | 103 | 101,7 | 117,2 |
| 7 | 67 | | 100 | 71 | 105 | 110 | 122,7 |
| 8 | 70 | | 104 | 75 | 106 | 113,9 | 125 |
| 9 | 73 | | 107 | 78 | 107 | 115,7 | 125,7 |
| 10 | 75 | | 108 | 82 | 108 | 116,3 | 125,9 |
| 11 | 77 | | 109 | 83 | 108 | 116,5 | 125,1 |
| 12 | 79 | | 109 | 87 | 107 | 116 | |
| 13 | 81 | | 109 | 90 | 106 | | |
| 14 | 87 | | 108 | 89 | | | |

| | | | | | | | |
|---|---|---|---|---|---|---|---|
| ^{a} Thorcat 535 (Phenylneodecanoat) der Firma Thor Especialidades, S.A. ^{b} TIB KAT 218 (Dibutylzinndilaurat) der Firma TIB Chemicals ^{c} siehe Synthesebeispiele ^{d} bezogen auf die Summe der Komponenten A und B | | | | | | | |

Die erfindungsgemäßen Katalysatoren, beispielsweise die Katalysatoren 1 und 3, zeigten den Hg-typischen Verlauf mit "Inkubationszeit". Beim TK 218 war ein schnelles Anspringen der Reaktion zu verzeichnen, die allerdings frühzeitig abgebremst wurde.

### c) Autoreparaturklarlackmodellsystem unter forcierten Trocknungsbedingungen - ein Vergleich erfindungsgemäßer Katalysatoren mit Katalysatoren des Standes der Technik

**Tabelle 5: Zusammensetzung der Komponenten A und B**

| **Komponente** | | **Definition** | **Gewichtsteile** |
|---|---|---|---|
| **Komponente A** | Synocure 852 BA 80 ^{a} | Acrylharz | 46,36 |
| | Tinuvin 292 ^{b} | Stabilisator^{d} | 0,27 |
| | Tinuvin 900 (8% in Xylol) ^{b} | Stabilisator^{e} | 3,4 |
| | Methoxypropylacetat (MPA) | Lösemittel | 3 |
| | Butylacetat | Lösemittel | 13,82 |
| | Xylol | Lösemittel | 13,83 |
| **Komponente B** | Vestanat HT 2500 L^{c} | aliphatisches Polyisocyanat auf Basis von HDI^{f} | 19,15 |

| | | | |
|---|---|---|---|
| ^{a} kommerziell erhältlich von der Firma Cray Valley ^{b} kommerziell erhältlich von der Firma BASF ^{c} kommerziell erhältlich von der Firma Evonik ^{d} auf Basis sterisch gehinderter Amine ^{e} auf Basis eines Hydroxyphenylbenzotriazols ^{f} HDI = Hexamethylendiisocyanat | | | |

100 g der in Tabelle 5 definierten Komponente A, 24 g der in Tabelle 5 definierten Komponente B und der jeweilige in Tabelle 6 angegebene Katalysator wurden per Hand vermischt und per 120 µm-Rakel auf ein Q-Panel (Stahlblech) aufgezogen.

**Tabelle 6: Topfzeit, Pendelhärte und MEK-Beständigkeit**

| **Beispiel** | **Katalysator** | **Menge Katalysator [g]** | **Topfzeit^{d}** | **Zeit / Temp.** | **PH^{e} nach Abkühlen** | **DR^{f} nach Abkühlen** |
|---|---|---|---|---|---|---|
| V3 | - | 0 | >4 h | 10 min 80 °C | 9 | 2 |
| V4 | TK 218 ^{a} | 0,1 | 25 min | 10 min 80 °C | 101 | 8 |
| 19 | 1^{b} | 2,5 | >4 h | 10 min 80 °C | 116 | 12 |
| 20 | 2^{b} | 2,5 | >4 h | 10 min 80 °C | 134 | 11 |
| 21 | 3^{b} | 2,5 | 3,5 h | 10 min 80 °C | 106 | 12 |
| 22 | 4^{b} | 2,5 | >4 h | 10 min 80 °C | 134 | 12 |
| 23 | 5^{b} | 2,5 | >4 h | 10 min 80 °C | 131 | 6 |
| V5 | - | 0 | >4 h | 10 min 90 °C | 13 | 2 |
| 24 | 6^{b} | 2,5 | 30 min | 10 min 80 °C | 109 | 10 |
| 25 | 7^{b} | 2,5 | >4 h | 10 min 90 °C | 119 | 7 |
| 26 | 8^{b} | 2,5 | >4 h | 10 min 80 °C | 71 | 8 |
| V5 | TK 319^{c} | 0,1 | 28 min | 10 min 80 °C | 92 | 8 |

| | | | | | | |
|---|---|---|---|---|---|---|
| ^{a} TIB KAT 218 (Dibutylzinndilaurat) der Firma TIB Chemicals ^{b} siehe Synthesebeispiele ^{c} TIB KAT 319 (Dibutylzinnbis(laurylmercaptid) der Firma TIB Chemicals ^{d} Topfzeit: Zeit bis die Gelierung einsetzt ^{e} PH: Pendelhärte - bestimmt gemäß DIN ISO 1522 ^{f} DR: MEK-Beständigkeit - Ein mit einem mit Methylethylketon getränkten Wattebausch bestücktes 1kg-Gewicht wurde gleichmäßig über die Prüffläche hin und her bewegt bis die Oberfläche erste Veränderungen erfährt. Die Zahl der bis dahin ausgeführten Doppelhübe wurde erfasst. | | | | | | |

Die Vergleichsprüfung im Autoreparaturklarklack zeigte deutlich die gewünschte Inaktivität der erfindungsgemäßen Katalysatoren bei Raumtemperatur. Es wurden teils Topfzeiten >4h (Prüfende) erreicht. Zum Vergleich lag die Topfzeit von TK 218 bei 25 Minuten. Trotzdem waren die mit den erfindungsgemäßen Katalysatoren erreichten Filmhärten und Chemikalienbeständigkeiten nach Abkühlung deutlich oberhalb des TK 218-Niveaus.

### d) Modellsystem auf Basis von 2-Ethylhexanol und Desmodur 3100

100 Gew.-Teile 2-Ethylhexanol inklusive der angegebenen Menge an Katalysator nach Beispiel 9, 165 Gew.-Teile Desmodur 3100 und 265 Gew.-Teile Butylacetat wurden gut vermischt. Jeweils ca. 10 g wurden dann im verschlossenen Reagenzglas bei der gewünschten Temperatur gehalten. Der Reaktionsfortschritt wurde durch IR-Spektroskopie verfolgt. Hierzu wurde die Fläche der Isocyanatbande bei 2269 cm⁻¹ herangezogen. Der angegebene Umsatz wurde ermittelt über die Abnahme der Bandenfläche im Vergleich zur Ausgangsfläche in %.

| **Katalysatormenge [Gew.-Teile]** | **Temperatur [°C]** | **Zeit [min]** | **Umsatz Isocynanat [%]** |
|---|---|---|---|
| - | 23 | 30 | <1 |
| - | 80 | 30 | 18 |
| 0,33 | RT | 30 | <1 |
| 0,33 | 80 | 30 | >90 |
| 0,66 | 23 | 30 | <1 |
| 0,66 | 60 | 30 | 68 |
| 0,66 | 80 | 10 | >95 |
| 0,66 | 80 | 20 | >99 |
| 1,00 | 23 | 30 | 22 |
| 1,00 | 60 | 30 | >99 |

Im unkatalysierten System erfolgte bei 23 °C innerhalb des Betrachtungszeitraumes keine detektierbare Umsetzung. Bei 80 °C erfolgte innerhalb 30 Minuten ein Umsatz von 18%. Bei einer Katalysatoreinsatzmenge von 0,33 bzw. 0,66 Gew.-Teilen ist bei 23 °C keine katalytische Aktivität erkennbar. Der per IR-Messung detektierbare Umsetz lag analog der unkatalysierten Prüfung bei <1%. Bei der Katalysatoreinsatzmenge von 0,33 Gew.-Teilen war dagegen bei 80 °C innerhalb 30 Minuten eine weitgehende Umsetzung mit einem Umsetzungsgrad >90% detektierbar. Mit einer Katalysatoreinsatzmenge von 0,66 Gew.-Teilen erfolgte bereits bei 60 °C innerhalb 30 Minuten ein deutlicher Umsatz. Der Umsetzungsgrad lag hier bei 68%. Bei einer Reaktionstemperatur von 80 °C wurde bereits nach 10 Minuten ein Umsetzungsgrad >95% und nach 20 Minuten ein Umsetzungsgrad >99% erzielt. Bei weiterer Erhöhung der Katalysatoreinsatzmenge auf 1,00 Gew.-Teile wurde bereits bei einer Reaktionstemperatur von 60 °C innerhalb 30 Minuten ein Umsatz von >99% erzielt.

## Patentansprüche

1. Verwendung einer oder mehrerer Metallverbindungen der Formel (A), (B) oder (C),
XₐY₍ₘ₋ₐ₎L_{d}M^{A} (A)
(X_{b}Y_{(m-b-1)}LₑM^{B})₂O (B)
[M^{c}(X_{c}Y_{(m-c-2)}L_{f})O]ₙ (C)
als Katalysator zur Herstellung von Polymeren,
**dadurch gekennzeichnet, dass** die Symbole M^{A}, M^{B}, M^{C}, X, Y, L sowie die Indizes m, a, b, c, d, e, f, n folgende Bedeutung haben:
M^{A} ist Sn, Ti, Zr, Hf, Fe oder Zn;
M^{B} ist gleich oder verschieden Sn, Ti, Zr, Hf, Fe oder Zn;
M^{C} ist gleich oder verschieden Sn, Ti, Zr, Hf oder Fe;
X ist ∼SR¹;
Y ist gleich oder verschieden Halogen, OR², OC(O)R², OS(O)₂R², NR²R³, NR²C(O)R³, NR²S(O)₂R³, OP(O)(OR²)(OR³), OP(O)(OR²)R³ oder OP(O)R²R³;
L ist ein neutraler Ligand und gleich oder verschieden;
oder mindestens zwei Vertreter aus der Gruppe X und Y bilden gemeinsam zusammen mit dem M-Atom, an das sie gebunden sind, mindestens einen Ring;
m ist 2, wenn M Zn ist;
3, wenn M Fe ist; und
4, wenn M Sn, Ti, Zr, Hf ist;
a ist eine ganze Zahl von 1 bis m;
b ist eine ganze Zahl von 1 bis m-1;
c ist eine ganze Zahl von 1 bis m-2;
d, e, f sind jeweils unabhängig voneinander eine ganze Zahl von 0 bis 6-m;
n ist eine ganze Zahl von 3 bis 12,
wobei die Symbole R¹, R², R³ und ~ folgende Bedeutung haben:
∼ ist eine Bindung an das M-Atom;
R¹ ist gleich oder verschieden lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O)(C₁-C₁₈-Alkyl),
wobei R¹ unsubstituiert oder mit 1 bis 3 Vertretern aus der Gruppe OH, O(C₁-C₁₈-Alkyl), O(C₂-C₁₈-Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl), C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert sind;
R², R³ sind unabhängig voneinander gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl,
wobei Alkyl, Alkenyl, Alkinyl, Cycloalkyl, Aryl in R², R³ jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aryl), S(O)₂OH, S(O)₂O(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert sind.

2. Verwendung gemäß Anspruch 1, wobei
M^{A} Sn, Ti, Zr, Hf, Fe oder Zn ist;
M^{B} gleich oder verschieden Sn, Ti, Zr, Hf oder Fe ist; M^{C} gleich oder verschieden Sn, Ti, Zr oder Hf ist;
a eine ganze Zahl von 1 bis m-1 ist;
b eine ganze Zahl von 1 bis m-2 ist;
c 1 ist.

3. Verwendung gemäß Anspruch 1 oder 2, wobei M^{A}, M^{B} und M^{C} Sn sind.

4. Verwendung gemäß einem der Ansprüche 1 bis 3, wobei Y OR² ist.

5. Verwendung gemäß einem der Ansprüche 1 bis 4, wobei M^{A}, M^{B} und M^{C} Sn sind und wobei Y OR² ist.

6. Verwendung gemäß einem der Ansprüche 1 bis 5, wobei das Polymer eine Polyisocyanat-Polyadditionsverbindung, ein Polyester oder ein Polysiloxan ist.

7. Verwendung gemäß einem der Ansprüche 1 bis 6, wobei das Polymer eine Polyisocyanat-Polyadditionsverbindung ist.

8. Verwendung gemäß Anspruch 6 oder 7, wobei die Polyisocyanat-Polyadditionsver-bindung ein Polyurethan ist.

9. Verwendung gemäß einem der Ansprüche 1 bis 8, wobei das Polymer ein Elastomer ist.

10. Verfahren zur Herstellung von Polyisocyanat-Polyadditionsverbindungen, **dadurch gekennzeichnet, dass** eine oder mehrere Metallverbindungen der Formel (A), (B) oder (C) gemäß Anspruch 1 als Katalysator verwendet werden.

11. Metallverbindung der Formel (A), (B) oder (C),
XₐY₍ᵢₙ₋ₐ₎L_{d}M^{A} (A)
(X_{b}Y_{(m-b-1)}LₑM^{B})₂O (B)
[M^{c}(X_{c}Y_{(m-c-2)}L_{f})O]ₙ (C)
als Katalysator zur Herstellung von Polymeren,
**dadurch gekennzeichnet, dass** die Symbole M^{A}, M^{B}, M^{C}, X, Y, L sowie die Indizes m, a, b, c, d, e, f, n folgende Bedeutung haben:
M^{A} ist Sn;
M^{B} ist Sn;
M^{C} ist Sn;
X ist ∼SR¹;
Y ist OR²;
L ist ein neutraler Ligand und gleich oder verschieden;
oder mindestens zwei Vertreter aus der Gruppe X und Y bilden gemeinsam zusammen mit dem M-Atom, an das sie gebunden sind, mindestens einen Ring;
m ist 4;
a ist eine ganze Zahl von 1 bis m-1;
b ist eine ganze Zahl von 1 bis m-2;
c ist 1;
d, e, f sind jeweils unabhängig voneinander eine ganze Zahl von 0 bis 6-m;
n ist eine ganze Zahl von 3 bis 12,
wobei die Symbole R¹, R², R³ und ~ folgende Bedeutung haben:
∼ ist eine Bindung an das M-Atom;
R¹ ist gleich oder verschieden lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl, C₆-C₁₀-Aryl oder C(O)(C₁-C₁₈-Alkyl),
wobei R¹ unsubstituiert oder mit 1 bis 3 Vertretern aus der Gruppe OH, O(C₁-C₁₈-Alkyl), O(C₂-C₁₈-Alkenyl), O(C₂-C₁₈-Alkinyl), O(C₆-C₁₀-Aryl), OC(O)(C₁-C₁₈-Alkyl), OC(O)(C₂-C₁₈-Alkenyl), OC(O)(C₂-C₁₈-Alkinyl), OC(O)(C₆-C₁₀-Aryl), OS(O)₂(C₁-C₁₈-Alkyl), OS(O)₂(C₂-C₁₈-Alkenyl), OS(O)₂(C₂-C₁₈-Alkinyl), OS(O)₂(C₆-C₁₀-Aryl), C(O)H, C(O)(C₁-C₁₈-Alkyl), C(O)(C₂-C₁₈-Alkenyl), C(O)(C₂-C₁₈-Alkinyl), C(O)(C₆-C₁₀-Aryl), C(O)OH, C(O)O(C₁-C₁₈-Alkyl), C(O)O(C₂-C₁₈-Alkenyl), C(O)O(C₂-C₁₈-Alkinyl), C(O)O(C₆-C₁₀-Aryl), SH, S(C₁-C₁₈-Alkyl), S(C₂-C₁₈-Alkenyl), S(C₂-C₁₈-Alkinyl), S(C₆-C₁₀-Aryl), S(O)₂(C₁-C₁₈-Alkyl), S(O)₂(C₂-C₁₈-Alkenyl), S(O)₂(C₂-C₁₈-Alkinyl), S(O)₂(C₆-C₁₀-Aryl), S(O)₂OH, S(O)₂O(C₁-C₁₈-Alkyl), S(O)₂O(C₂-C₁₈-Alkenyl), S(O)₂O(C₂-C₁₈-Alkinyl), S(O)₂O(C₆-C₁₀-Aryl), C₁-C₁₈-Alkyl, C₂-C₁₈-Alkenyl, C₂-C₁₈-Alkinyl, C₃-C₁₀-Cycloalkyl, C₆-C₁₀-Aryl, Halogen, CF₃ und CN substituiert sind;
R² ist gleich oder verschieden H, lineares oder verzweigtes C₁-C₁₈-Alkyl, lineares oder verzweigtes C₂-C₁₈-Alkenyl, lineares oder verzweigtes C₂-C₁₈-Alkinyl, C₃-C₁₀-Cycloalkyl oder C₆-C₁₀-Aryl,
wobei Alkyl, Alkenyl, Alkinyl, Cycloalkyl, Aryl in R² jeweils unabhängig voneinander unsubstituiert oder mit 1 bis 3 Vertretern aus der Gruppe OH, O(C₁-C₁₈-Alkyl), O(C₆-C₁₀-Aryl), OC(O)(C₁-C₁₈-Alkyl), OC(O)(C₆-C₁₀-Aryl), OS(O)₂(C₁-C₁₈-Alkyl), OS(O)₂(C₆-C₁₀-Aryl), C(O)H, C(O)(C₁-C₁₈-Alkyl), C(O)(C₆-C₁₀-Aryl), C(O)OH, C(O)O(C₁-C₁₈-Alkyl), C(O)O(C₆-C₁₀-Aryl), SH, S(C₁-C₁₈-Alkyl), S(C₆-C₁₀-Aryl), S(O)₂(C₁-C₁₈-Alkyl), S(O)₂(C₆-C₁₀-Aryl), S(O)₂OH, S(O)₂O(C₁-C₁₈-Alkyl), S(O)₂O(C₆-C₁₀-Aryl), C₁-C₁₈-Alkyl, C₃-C₁₀-Cycloalkyl, C₆-C₁₀-Aryl, Halogen, CF₃ und CN substituiert sind.

## Claims

1. The use of one or more metal compounds of the formula (A), (B) or (C),
XₐY₍ₘ₋ₐ₎L_{d}M^{A} (A)
(X_{b}Y_{(m-b-1)}LₑM^{B})₂O (B)
[M^{c}(X_{c}Y_{(m-c-2)}L_{f})O]ₙ (C)
as a catalyst for the preparation of polymers,
**characterized in that** the symbols M^{A}, M^{B}, M^{C}, X, Y, L and the indices m, a, b, c, d, e, f, n have the following meanings:
M^{A} is Sn, Ti, Zr, Hf, Fe or Zn;
M^{B} is identical or different, being Sn, Ti, Zr, Hf, Fe or Zn;
M^{C} is identical or different, being Sn, Ti, Zr, Hf or Fe;
X is ∼SR¹;
Y is identical or different, being halogen, OR², OC(O)R², OS(O)₂R², NR²R³, NR²C(O)R³, NR²S(O)₂R³, OP(O)(OR²)(OR³), OP(O)(OR²)R³ or OP(O)R²R³;
L is a neutral ligand and identical or different;
or at least two members of the group X and Y form together with the M atom, to which they are bound, at least one ring;
m is 2, when M is Zn;
3, when M is Fe; and
4, when M is Sn, Ti, Zr, Hf;
a is an integer of from 1 to m;
b is an integer of from 1 to m-1;
c is an integer of from 1 to m-2;
d, e, f are each independently an integer of from 0 to 6-m;
n is an integer of from 3 to 12,
where the symbols R¹, R², R³ and ∼ have the following meanings:
∼ is a bond to the M atom;
R¹ is identical or different, being linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl or C(O)(C₁-C₁₈-alkyl),
where R¹ are unsubstituted or substituted with 1 to 3 members of the group OH, O(C₁-C₁₈-alkyl), O(C₂-C₁₈-alkenyl), O(C₂-C₁₈-alkinyl), O(C₆-C₁₀-aryl), OC(O)(C₁-C₁₈-alkyl), OC(O)(C₂-C₁₈-alkenyl), OC(O)(C₂-C₁₈-alkinyl), OC(O)(C₆-C₁₀-aryl), OS(O)₂(C₁-C₁₈-alkyl), OS(O)₂(C₂-C₁₈-alkenyl), OS(O)₂(C₂-C₁₈-alkinyl), OS(O)₂(C₆-C₁₀-aryl), C(O)H, C(O)(C₁-C₁₈-alkyl), C(O)(C₂-C₁₈-alkenyl), C(O)(C₂-C₁₈-alkinyl), C(O)(C₆-C₁₀-aryl), C(O)OH, C(O)O(C₁-C₁₈-alkyl), C(O)O(C₂-C₁₈-alkenyl), C(O)O(C₂-C₁₈-alkinyl), C(O)O(C₆-C₁₀-aryl), SH, S(C₁-C₁₈-alkyl), S(C₂-C₁₈-alkenyl), S(C₂-C₁₈-alkinyl), S(C₆-C₁₀-aryl), S(O)₂(C₁-C₁₈-alkyl), S(O)₂(C₂-C₁₈-alkenyl), S(O)₂(C₂-C₁₈-alkinyl), S(O)₂(C₆-C₁₀-aryl), S(O)₂OH, S(O)₂O(C₁-C₁₈-alkyl), S(O)₂O(C₂-C₁₈-alkenyl), S(O)₂O(C₂-C₁₈-alkinyl), S(O)₂O(C₆-C₁₀-aryl), C₁-C₁₈-alkyl, C₂-C₁₈-alkenyl, C₂-C₁₈-alkinyl, C₃-C₁₀-cycloalkyl, C₆-C₁₀-aryl, halogen, CF₃ and CN;
R², R³ are independently identical or different, being H, linear or branched C₁-C₁₈-alkyl, linear or branched C₂-C₁₈-alkenyl, linear or branched C₂-C₁₈-alkinyl, C₃-C₁₀-cycloalkyl or C₆-C₁₀-aryl,
where alkyl, alkenyl, alkinyl, cycloalkyl, aryl in R², R³ are each independently unsubstituted or substituted with 1 to 3 members of the group OH, O(C₁-C₁₈-alkyl), O(C₆-C₁₀-aryl), OC(O)(C₁-C₁₈-alkyl), OC(O)(C₆-C₁₀-aryl), OS(O)₂(C₁-C₁₈-alkyl), OS(O)₂(C₆-C₁₀-aryl), C(O)H, C(O)(C₁-C₁₈-alkyl), C(O)(C₆-C₁₀-aryl), C(O)OH, C(O)O(C₁-C₁₈-alkyl), C(O)O(C₆-C₁₀-aryl), SH, S(C₁-C₁₈-alkyl), S(C₆-C₁₀-aryl), S(O)₂(C₁-C₁₈alkyl), S(O)₂(C₆-C₁₀-aryl), S(O)₂OH, S(O)₂O(C₁-C₁₈-alkyl), S(O)₂O(C₆-C₁₀-aryl), C₁-C₁₈-alkyl, C₃-C₁₀-cycloalkyl, C₆-C₁₀-aryl, halogen, CF₃ and CN.

2. The use according to claim 1, where
M^{A} is Sn, Ti, Zr, Hf, Fe or Zn;
M^{B} is identical or different, being Sn, Ti, Zr, Hf or Fe;
M^{C} is identical or different, being Sn, Ti, Zr or Hf;
a is an integer of from 1 to m-1;
b is an integer of from 1 to m-2;
c is 1.

3. The use according to claim 1 or 2, where M^{A}, M^{B} and M^{C} are Sn.

4. The use according to any one of claims 1 to 3, where Y is OR².

5. The use according to any one of claims 1 to 4, where M^{A}, M^{B} and M^{C} are Sn, and where Y is OR².

6. The use according to any one of claims 1 to 5, where the polymer is a polyisocyanate polyaddition compound, a polyester or a polysiloxane.

7. The use according to any one of claims 1 to 6, where the polymer is a polyisocyanate polyaddition compound.

8. The use according to claim 6 or 7, where the polyisocyanate polyaddition compound is a polyurethane.

9. The use according to any one of claims 1 to 8, where the polymer is an elastomer.

10. Method for the preparation of polyisocyanate polyaddition compounds, **characterized in that** one or more metal compounds of the formula (A), (B) or (C) according to claim 1 are used as a catalyst.

11. Metal compound of the formula (A), (B) or (C),
XₐY₍ₘ₋ₐ₎L_{d}M^{A} (A)
(X_{b}Y_{(m-b-1)}LₑM^{B})₂O (B)
[M^{C}(X_{c}Y_{(m-c-2)}L_{f})O]ₙ (C)
as a catalyst for the preparation of polymers,
**characterized in that** the symbols M^{A}, M^{B}, M^{C}, X, Y, L and the indices m, a, b, c, d, e, f, n have the following meanings:
M^{A} is Sn;
M^{B} is Sn;
M^{C} is Sn;
X is ∼SR¹;
Y is OR²;
L is a neutral ligand and identical or different;
or at least two members of the group X and Y form together with the M atom, to which they are bound, at least one ring;
m is 4;
a is an integer of from 1 to m-1;
b is an integer of from 1 to m-2;
c is 1;
d, e, f are each independently an integer of from 0 to 6-m;
n is an integer of from 3 to 12,
where the symbols R¹, R², R³ and ∼ have the following meanings:
∼ is a bond to the M atom;
R¹ is identical or different, being linear or branched C₁-C₁₈-alkyl, linear or branched C₂-C₁₈-alkenyl, linear or branched C₂-C₁₈-alkinyl, C₃-C₁₀-cycloalkyl, C₆-C₁₀-aryl or C(O)(C₁-C₁₈-alkyl),
where R¹ are unsubstituted or substituted with 1 to 3 members of the group OH, O(C₁-C₁₈-alkyl), O(C₂-C₁₈-alkenyl), O(C₂-C₁₈-alkinyl), O(C₆-C₁₀-aryl), OC(O)(C₁-C₁₈-alkyl), OC(O)(C₂-C₁₈-alkenyl), OC(O)(C₂-C₁₈-alkinyl), OC(O)(C₆-C₁₀-aryl), OS(O)₂(C₁-C₁₈-alkyl), OS(O)₂(C₂-C₁₈-alkenyl), OS(O)₂(C₂-C₁₈-alkinyl), OS(O)₂(C₆-C₁₀-aryl), C(O)H, C(O)(C₁-C₁₈-alkyl), C(O)(C₂-C₁₈-alkenyl), C(O)(C₂-C₁₈-alkinyl), C(O)(C₆-C₁₀-aryl), C(O)OH, C(O)O(C₁-C₁₈-alkyl), C(O)O(C₂-C₁₈-alkenyl), C(O)O(C₂-C₁₈-alkinyl), C(O)O(C₆-C₁₀-aryl), SH, S(C₁-C₁₈-alkyl), S(C₂-C₁₈-alkenyl), S(C₂-C₁₈-alkinyl), S(C₆-C₁₀-aryl), S(O)2(C₁-C₁₈-alkyl), S(O)₂(C₂-C₁₈-alkenyl), S(O)₂(C₂-C₁₈-alkinyl), S(O)₂(C₆-C₁₀-aryl), S(O)₂OH, S(O)₂O(C₁-C₁₈-alkyl), S(O)₂O(C₂-C₁₈-alkenyl), S(O)₂O(C₂-C₁₈-alkinyl), S(O)₂O(C₆-C₁₀-aryl), C₁-C₁₈-alkyl, C₂-C₁₈-alkenyl, C₂-C₁₈-alkinyl, C₃-C₁₀-cycloalkyl, C₆-C₁₀-aryl, halogen, CF₃ and CN;
R² is identical or different, being H, linear or branched C₁-C₁₈-alkyl, linear or branched C₂-C₁₈-alkenyl, linear or branched C₂-C₁₈-alkinyl, C₃-C₁₀-cycloalkyl or C₆-C₁₀-aryl,
where alkyl, alkenyl, alkinyl, cycloalkyl, aryl in R² are each independently unsubstituted or substituted with 1 to 3 members of the group OH, O(C₁-C₁₈-alkyl), O(C₆-C₁₀-aryl), OC(O)(C₁-C₁₈-alkyl), OC(O)(C₆-C₁₀-aryl), OS(O)₂(C₁-C₁₈-alkyl), OS(O)₂(C₆-C₁₀-aryl), C(O)H, C(O)(C₁-C₁₈-alkyl), C(O)(C₆-C₁₀-aryl), C(O)OH, C(O)O(C₁-C₁₈-alkyl), C(O)O(C₆-C₁₀-aryl), SH, S(C₁-C₁₈-alkyl), S(C₆-C₁₀-aryl), S(O)₂(C₁-C₁₈-alkyl), S(O)ₐ(C₆-C₁₀-aryl), S(O)₂OH, S(O)₂O(C₁-C₁₈-alkyl), S(O)₂O(C₆-C₁₀-aryl), C₁-C₁₈-alkyl, C₃-C₁₀-cycloalkyl, C₆-C₁₀-aryl, halogen, CF₃ and CN.

## Revendications

1. Utilisation d'un ou de plusieurs composés métalliques de formule (A), (B) ou (C),
XₐY₍ₘ₋ₐ₎L_{d}M^{A} (A)
(X_{b}Y_{(m-b-1)}L_{c}M^{B})₂O (B)
[M^{C}(X_{c}Y_{(m-c-2)}L_{f})O]ₙ (C)
en tant que catalyseur pour la fabrication de polymères,
**caractérisée en ce que** les symboles M^{A}, M^{B}, M^{C}, X, Y, L, ainsi que les indices m, a, b, c, d, e, f, n ont la signification suivante :
M^{A} représente Sn, Ti, Zr, Hf, Fe ou Zn ;
les M^{B} sont identiques ou différents, et représentent Sn, Ti, Zr, Hf, Fe ou Zn ;
les M^{C} sont identiques ou différents, et représentent Sn, Ti, Zr, Hf ou Fe ;
X représente ∼SR¹ ;
les Y sont identiques ou différents, et représentent halogène, OR², OC(O)R², OS(O)₂R², NR²R³, NR²C(O)R³, NR²S(O)₂R³, OP(O)(OR²) (OR³), OP(O) (OR²)R³ ou OP(O)R²R³ ;
les L représentent un ligand neutre, et sont identiques ou différents ;
ou au moins deux éléments du groupe constitué par X et Y forment ensemble avec l'atome M auquel ils sont reliés au moins un cycle ;
m représente 2 lorsque M représente Zn ;
représente 3 lorsque M représente Fe ; et représente 4 lorsque M représente Sn, Ti, Zr, Hf ;
a représente un nombre entier de 1 à m ;
b représente un nombre entier de 1 à m-1 ;
c représente un nombre entier de 1 à m-2 ;
d, e, f représentent chacun indépendamment les uns des autres un nombre entier de 0 à 6-m ;
n représente un nombre entier de 3 à 12,
les symboles R¹, R², R³ et ∼ ayant la signification suivante :
∼ représente une liaison à l'atome M ;
les R¹ sont identiques ou différents, et représentent alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀ ou C(O) (alkyle en C₁-C₁₈),
R¹ étant non substitué ou substitué avec 1 à 3 éléments du groupe constitué par OH, 0(alkyle en C₁-C₁₈), 0 (alcényle en C₂-C₁₈), 0 (alcynyle en C₂-C₁₈), O(aryle en C₆-C₁₀), OC(O)(alkyle en C₁-C₁₈), OC (0) (alcényle en C₂-C₁₈), OC (0) (alcynyle en C₂-C₁₈), OC (0) (aryle en C₆-C₁₀), OS (O)₂(alkyle en C₁-C₁₈), OS (0) ₂ (alcényle en C₂-C₁₈), OS(O)₂(alcynyle en C₂-C₁₈), OS(O)₂(aryle en C₆-C₁₀), C(O)H, C(O)(alkyle en C₁-C₁₈), C(O)(alcényle en C₂-C₁₈), C(O)(alcynyle en C₂-C₁₈), C(O)(aryle en C₆-C₁₀), C(O)OH, C(O)O(alkyle en C₁-C₁₈), C(O)O(alcényle en C₂-C₁₈), C(O)O(alcynyle en C₂-C₁₈), C(O)O(aryle en C₆-C₁₀), SH, S(alkyle en C₁-C₁₈), S(alcényle en C₂-C₁₈)), S(alcynyle en C₂-C₁₈)), S(aryle en C₆-C₁₀), S(O)₂(alkyle en C₁-C₁₈)), S(O)₂(alcényle en C₂-C₁₈), S (0)₂(alcynyle en C₂-C₁₈), S(O)₂(aryle en C₆-C₁₀), S(O)₂OH, S(O)₂O(alkyle en C₁-C₁₈), S(O)₂O(alcényle en C₂-C₁₈), S(O)₂O (alcynyle en C₂-C₁₈), S(O)₂O(aryle en C₆-C₁₀), alkyle en C₁-C₁₈, alcényle en C₂-C₁₈, alcynyle en C₂-C₁₈, cycloalkyle en C₃-C₁₀, aryle en C₆-C₁₀, halogène, CF₃ et CN ;
R², R³ sont indépendamment l'un de l'autre identiques ou différents, et représentent H, alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀ ou aryle en C₆-C₁₀,
l'alkyle, l'alcényle, l'alcynyle, le cycloalkyle, l'aryle dans R², R³ étant chacun indépendamment les uns des autres non substitués ou substitués avec 1 à 3 éléments du groupe constitué par OH, 0(alkyle en C₁-C₁₈), O(aryle en C₆-C₁₀), OC(O) (alkyle en C₁-C₁₈), OC(O)(aryle en C₆-C₁₀), OS(O)₂(alkyle en C₁-C₁₈), OS(O)₂(aryle en C₆-C₁₀), C(O)H, C(O)(alkyle en C₁-C₁₈), C(O)(aryle en C₆-C₁₀), C(O)OH, C(O)O (alkyle en C₁-C₁₈), C(O)O (aryle en C₆-C₁₀), SH, S (alkyle en C₁-C₁₈), S (aryle en C₆-C₁₀), S(O)₂(alkyle en C₁-C₁₈), S(O)₂(aryle en C₆-C₁₀), S(O)₂OH, S (O)₂O (alkyle en C₁-C₁₈), S(O)₂O(aryle en C₆-C₁₀), alkyle en C₁-C₁₈, cycloalkyle en C₃-C₁₀, aryle en C₆-C₁₀, halogène, CF₃ et CN.

2. Utilisation selon la revendication 1, dans laquelle
M^{A} représente Sn, Ti, Zr, Hf, Fe ou Zn ;
les M^{B} sont identiques ou différents, et représentent Sn, Ti, Zr, Hf ou Fe ;
les M^{C} sont identiques ou différents, et représentent Sn, Ti, Zr ou Hf ;
a représente un nombre entier de 1 à m-1 ;
b représente un nombre entier de 1 à m-2 ;
c représente 1.

3. Utilisation selon la revendication 1 ou 2, dans laquelle M^{A}, M^{B} et M^{C} représentent Sn.

4. Utilisation selon l'une quelconque des revendications 1 à 3, dans laquelle Y représente OR².

5. Utilisation selon l'une quelconque des revendications 1 à 4, dans laquelle M^{A}, M^{B} et M^{C} représentent Sn et Y représente OR².

6. Utilisation selon l'une quelconque des revendications 1 à 5, dans laquelle le polymère est un composé de polyaddition de polyisocyanate, un polyester ou un polysiloxane

7. Utilisation selon l'une quelconque des revendications 1 à 6, dans laquelle le polymère est un composé de polyaddition de polyisocyanate.

8. Utilisation selon la revendication 6 ou 7, dans laquelle le composé de polyaddition de polyisocyanate est un polyuréthane.

9. Utilisation selon l'une quelconque des revendications 1 à 8, dans laquelle le polymère est un élastomère.

10. Procédé de fabrication de composés de polyaddition de polyisocyanate, **caractérisé en ce qu'**un ou plusieurs composés métalliques de formule (A), (B) ou (C) selon la revendication 1 sont utilisés en tant que catalyseur.

11. Composé métallique de formule (A), (B) ou (C),
XₐY₍ₘ₋ₐ₎L_{d}M^{A} (A)
(X_{b}Y_{(m-b-1)}LₑM^{B})₂O (B)
[M^{C}(X_{c}Y_{(m-c-2)}L_{f})O]ₙ (C)
en tant que catalyseur pour la fabrication de polymères,
**caractérisé en ce que** les symboles M^{A}, M^{B}, M^{C}, X, Y, L, ainsi que les indices m, a, b, c, d, e, f, n ont la signification suivante :
M^{A} représente Sn ;
M^{B} représente Sn ;
M^{C} représente Sn ;
X représente ∼SR¹ ;
Y représente OR² ;
les L représentent un ligand neutre, et sont identiques ou différents ;
ou au moins deux éléments du groupe constitué par X et Y forment ensemble avec l'atome M auquel ils sont reliés au moins un cycle ;
m représente 4 ;
a représente un nombre entier de 1 à m-1 ;
b représente un nombre entier de 1 à m-2 ;
c représente 1 ;
d, e, f représentent chacun indépendamment les uns des autres un nombre entier de 0 à 6-m ;
n représente un nombre entier de 3 à 12,
les symboles R¹, R², R³ et ∼ ayant la signification suivante :
∼ représente une liaison à l'atome M ;
les R¹ sont identiques ou différents, et représentent alkyle en C₁-C₁₈ linéaire ou ramifié, alcényle en C₂-C₁₈ linéaire ou ramifié, alcynyle en C₂-C₁₈ linéaire ou ramifié, cycloalkyle en C₃-C₁₀, aryle en C₆-C₁₀ ou C(O) (alkyle en C₁-C₁₈),
R¹ étant non substitué ou substitué avec 1 à 3 éléments du groupe constitué par OH, 0(alkyle en C₁-C₁₈), 0 (alcényle en C₂-C₁₈), 0 (alcynyle en C₂-C₁₈), O(aryle en C₆-C₁₀), OC (0) (alkyle en C₁-C₁₈), OC (0) (alcényle en C₂-C₁₈), OC (0) (alcynyle en C₂-C₁₈), OC (0) (aryle en C₆-C₁₀), OS(O)₂(alkyle en C₁-C₁₈), OS(O)₂ (alcényle en C₂-C₁₈), OS(O)₂(alcynyle en C₂-C₁₈), OS(O)₂(aryle en C₆-C₁₀), C(O)H, C(O)(alkyle en C₁-C₁₈), C(O)(alcényle en C₂-C₁₈), C(O)(alcynyle en C₂-C₁₈), C(O)(aryle en C₆-C₁₀), C(O)OH, C(O)O(alkyle en C₁-C₁₈), C(O)O(alcényle en C₂-C₁₈), C(O)O(alcynyle en C₂-C₁₈), C(O)O(aryle en C₆-C₁₀), SH, S (alkyle en C₁-C₁₈), S (alcényle en C₂-C₁₈), S (alcynyle en C₂-C₁₈), S (aryle en C₆-C₁₀), S(O)₂(alkyle en C₁-C₁₈), S(O)₂(alcényle en C₂-C₁₈), S(O)₂(alcynyle en C₂-C₁₈), S(O)₂(aryle en C₆-C₁₀), S(O)₂OH, S(O)₂O(alkyle en C₁-C₁₈), S(O)₂O(alcényle en C₂-C₁₈), S(O)₂O(alcynyle en C₂-C₁₈), S(O)₂O(aryle en C₆-C₁₀), alkyle en C₁-C₁₈, alcényle en C₂-C₁₈, alcynyle en C₂-C₁₈, cycloalkyle en C₃-C₁₀, aryle en C₆-C₁₀, halogène, CF₃ et CN ;
les R² sont identiques ou différents, et représentent H, alkyle en C₁-C₁₈ linéaire ou ramifié, alcényle en C₂-C₁₈ linéaire ou ramifié, alcynyle en C₂-C₁₈- linéaire ou ramifié, cycloalkyle en C₃-C₁₀ ou aryle en C₆-C₁₀,
l'alkyle, l'alcényle, l'alcynyle, le cycloalkyle, l'aryle dans R² étant chacun indépendamment les uns des autres non substitués ou substitués avec 1 à 3 éléments du groupe constitué par OH, O(alkyle en C₁-C₁₈), O(aryle en C₆-C₁₀), OC(O) (alkyle en C₁-C₁₈), OC(O) (aryle en C₆-C₁₀), OS(O)₂(alkyle en C₁-C₁₈), OS(O)₂(aryle en C₆-C₁₀), C(O)H, C(O) (alkyle en C₁-C₁₈), C(O) (aryle en C₆-C₁₀), C(O)OH, C(O)O(alkyle en C₁-C₁₈), C(O)O(aryle en C₆-C₁₀), SH, S(alkyle en C₁-C₁₈), S(aryle en C₆-C₁₀), S(O)₂(alkyle en C₁-C₁₈), S(O)₂(aryle en C₆-C₁₀), S(O)₂OH, S(O)₂O(alkyle en C₁-C₁₈), S(O)₂O(aryle en C₆-C₁₀), alkyle en C₁-C₁₈, cycloalkyle en C₃-C₁₀, aryle en C₆-C₁₀, halogène, CF₃ et CN.
